# EUROPEAN PATENT APPLICATION

(11) **EP 4 775 292 A1**
(43) Date of publication of application: **15.07.2026**
(21) Application number: 24863004.8
(22) Date of filing: 16.07.2024
(51) Int. Cl.: B01D 53/00, B01D 53/30, B01D 36/00, B01D 5/00

(54) **GAS SEPARATION SYSTEM AND GAS SEPARATION METHOD USING SAME**

(30) Priority: 06.09.2023 KR 20230118597; 06.09.2023 KR 20230118598
(71) Applicant: LS Electric Co., Ltd., Anyang-si, Gyeonggi-do 14119 (KR)
(72) Inventor: KIM, Han Gil, Anyang-si, Gyeonggi-do 14118 (KR); KIM, Sang Eon, Anyang-si, Gyeonggi-do 14118 (KR); JUNG, Jongchul, Anyang-si, Gyeonggi-do 14118 (KR); KIM, Yong Gi, Anyang-si, Gyeonggi-do 14118 (KR); CHO, Wook Dong, Anyang-si, Gyeonggi-do 14118 (KR)
(74) Representative: K&L Gates LLP
(86) International application number: PCT/KR2024/010188
(87) International publication number: WO 2025/053422

(57) **Abstract**

A gas separation system is disclosed. The gas separation system according to an embodiment of the present invention includes: an inlet/outlet flow path unit which receives a gaseous mixed fluid from an external first container and transfers to the outside a recovery fluid and a discharge fluid which are separated from the mixed fluid; a fluid separation unit configured to separate the transferred mixed fluid in a gas phase into the recovery fluid in a gas phase and the discharge fluid in a gas phase; a circulation flow path unit fluidically connected to each of the inlet/outlet flow path unit and the fluid separation unit; and a fluid collection unit fluidically connected to each of the circulation flow path unit and the inlet/outlet flow path unit to receive and collect the separated gaseous recovery fluid.

## Description

### TECHNICAL FIELD

The present invention relates to a gas separation system and a gas separation method using the same, and more particularly, to a gas separation system capable of effectively separating and recovering only a specific fluid from a mixture containing a plurality of fluids, and a gas separation method using the same.

### BACKGROUND

Gas insulated switchgear (GIS) is a safety device provided in high-voltage power systems, such as power plants or substations. The gas insulated switchgear performs switching of load current under normal operating conditions. In addition, the gas insulated switchgear is provided to protect a power system by switching lines even under abnormal conditions, such as the occurrence of an accident current or a short-circuit current.

The gas insulated switchgear is provided with an insulating gas. The insulating gas is provided in the gas insulated switchgear to perform an insulating function, thereby improving operational reliability of the gas insulated switchgear.

In conventional gas insulated switchgear, sulfur hexafluoride (SF₆) is provided as the insulating gas. Sulfur hexafluoride can be produced at low cost, has excellent insulating performance, exhibits a high arc-quenching capability, and has a fast insulation recovery speed, and thus has been widely used as an insulating gas.

However, sulfur hexafluoride corresponds to a greenhouse gas that causes global warming. Recently, as interest in and regulations on environmental protection have increased, a consensus on reducing greenhouse gases has been formed, particularly in developed countries, and studies have been conducted to develop insulating gases capable of replacing sulfur hexafluoride.

For example, Novec^{™} 1230 (C₆F₁₂O) developed by 3M has been developed and utilized to replace sulfur hexafluoride. However, insulating gases developed to date require excessive costs to secure insulating performance comparable to that of sulfur hexafluoride.

Meanwhile, an insulating gas also has characteristics of a consumable. That is, as use of the gas insulated switchgear continues, the insulating gas needs to be periodically replaced and refilled. Accordingly, since expensive insulating gas needs to be continuously supplied to the gas insulated switchgear, a significant burden is imposed on operators of power systems and consumers receiving electric power.

Accordingly, technologies for recovering and reusing previously used insulating gas have been introduced.

Korean Registered Patent Publication No. 10-1086311 discloses a gas filter apparatus for sulfur hexafluoride gas insulated switchgear. Specifically, it discloses a gas filter apparatus having a structure capable of removing dust and the like included in recovered sulfur hexafluoride gas and then reintroducing the sulfur hexafluoride gas.

However, the gas filter apparatus for sulfur hexafluoride gas insulated switchgear disclosed in the above prior art still presupposes that sulfur hexafluoride is used as the insulating gas. That is, the above prior art does not present a solution for a material to be used as an insulating gas to replace sulfur hexafluoride.

International Patent Publication No. 2015-102229 discloses a method for treating sulfur hexafluoride using radiation, recovery of by-products, and a treatment apparatus. Specifically, the publication discloses a treatment method and a treatment apparatus for irradiating a mixed gas of sulfur hexafluoride and hydrogen with radiation to decompose sulfur hexafluoride and hydrogen into hydrogen fluoride and sulfur and then recover the same.

However, the treatment method and apparatus disclosed in the above prior art presuppose that sulfur hexafluoride is used as an insulating gas and disclose only a solution for removing sulfur hexafluoride. That is, the above prior art does not present a solution for recovering an insulating gas composed of a material other than sulfur hexafluoride.

Korean Registered Patent Publication No. 10-1086311 (Nov. 23, 2011)

International Patent Publication No. 2015-102229 (Jul. 9, 2015)

### DISCLOSURE

### TECHNICAL PROBLEM

The present invention has been made to solve the above-described problems, and an object of the present invention is to provide a gas separation system capable of efficiently separating a target fluid to be recovered from a mixed fluid, and a gas separation method using the same.

Another object of the present invention is to provide a gas separation system in which the target fluid to be recovered can undergo a separation process multiple times, and a gas separation method using the same.

Still another object of the present invention is to provide a gas separation system capable of improving separation efficiency of the target fluid to be recovered, and a gas separation method using the same.

Still another object of the present invention is to provide a gas separation system capable of efficiently collecting and recovering the target fluid to be recovered, and a gas separation method using the same.

Still another object of the present invention is to provide a gas separation system in which remaining target fluid to be recovered can undergo the separation process again, and a gas separation method using the same.

The technical problems of the present invention are not limited to those described above, and other problems not mentioned herein will be clearly understood by those skilled in the art from the following description.

### TECHNICAL SOLUTION

According to an aspect of the present invention, a gas separation system is provided, comprising an inlet/outlet flow path unit configured to receive a gas-phase mixed fluid from an external first container and to deliver, to the outside, a recovery fluid and a discharge fluid separated from the mixed fluid; a fluid separation unit configured to separate the received gas-phase mixed fluid into the gas-phase recovery fluid and the gas-phase discharge fluid; a circulation flow path unit fluidically connected to the inlet/outlet flow path unit and the fluid separation unit; and a fluid collection unit fluidically connected to the circulation flow path unit and the inlet/outlet flow path unit, and configured to receive and collect the separated gas-phase recovery fluid, wherein the inlet/outlet flow path unit is fluidically connected to the fluid collection unit and a second container configured to receive the recovery fluid, and wherein a downstream side of the fluid separation unit is positioned higher than an upper side of the fluid collection unit, and a lower side of the fluid collection unit is positioned higher than the second container, such that the separated recovery fluid flows in a direction from an upper side toward a lower side, is collected in the fluid collection unit, and is received in the second container.

In this case, a gas separation system may be provided in which the gas separation system further includes an outlet filter disposed on the inlet/outlet flow path unit, fluidically connected to the inlet/outlet flow path unit, and configured to separate a gas-phase discharge fluid remaining in the phase-changed recovery fluid flowing from the fluid collection unit toward the second container, and an inlet end of the outlet filter is positioned, in an upward-downward direction, lower than a lower side of the fluid collection unit, and an outlet end of the outlet filter is positioned, in the upward-downward direction, higher than an upper side of the second container.

In addition, a gas separation system may be provided in which a plurality of fluid separation units are fluidically connected to each other such that a portion of the gas-phase mixed fluid that has permeated one of the fluid separation units passes another one of the fluid separation units; the circulation flow path unit includes a first circulation flow path fluidically connected to the inlet/outlet flow path unit and one of the fluid separation units, and a second circulation flow path extending between one portion and another portion of the first circulation flow path and fluidically connected to another one of the fluid separation units, such that the gas-phase mixed fluid flows along the first circulation flow path, passes one of the fluid separation units, and is separated into a gas-phase recovery fluid and a gas-phase residual fluid; and the gas-phase residual fluid flows along the second circulation flow path, passes another one of the fluid separation units, and, after a gas-phase discharge fluid is further separated, re-enters the first circulation flow path.

In this case, a gas separation system may be provided in which the one portion of the first circulation flow path is positioned between a point at which the first circulation flow path is connected to the inlet/outlet flow path unit and one of the fluid separation units.

In addition, a gas separation system may be provided in which the second circulation flow path is fluidically connected to one of the fluid separation units, and another one of the fluid separation units is positioned between the one portion of the first circulation flow path and the one of the fluid separation units.

In this case, a gas separation system may be provided in which the fluid collection unit includes a fluid collection cylinder fluidically connected to the first circulation flow path to receive and accommodate the gas-phase recovery fluid that has passed one of the fluid separation units; and a cooling device connected to the fluid collection cylinder and configured to provide a refrigerant that cools the gas-phase recovery fluid such that the gas-phase recovery fluid undergoes a phase change to a liquid phase; and the fluid collection cylinder extends in an upward-downward direction, such that an upper side of the fluid collection cylinder is positioned below the fluid separation unit, and a lower side of the fluid collection cylinder is positioned above the second container.

In addition, a gas separation system may be provided in which the circulation flow path unit includes a third circulation flow path fluidically connected to the fluid collection cylinder and the first circulation flow path, and the gas-phase discharge fluid remaining in the liquid-phase recovery fluid accommodated in the fluid collection cylinder and not having undergone a phase change flows along the third circulation flow path and re-enters the first circulation flow path.

In this case, a gas separation system may be provided in which the inlet/outlet flow path unit includes a recovery fluid outlet flow path fluidically connected to the fluid collection cylinder and the second container, and the liquid-phase recovery fluid that has undergone a phase change in the fluid collection cylinder is discharged along the recovery fluid outlet flow path to the second container.

In addition, a gas separation system may be provided in which the gas separation system further includes an outlet filter positioned between the fluid collection cylinder and the second container, fluidically connected to the recovery fluid outlet flow path, and configured to separate the gas-phase discharge fluid remaining in the liquid-phase recovery fluid, and the inlet/outlet flow path unit includes a separated fluid discharge flow path fluidically connected to the outlet filter to define a flow path through which the separated gas-phase discharge fluid is discharged to the outside.

In this case, a gas separation system may be provided in which the gas separation system further includes a flow rate pump fluidically connected to the separated fluid discharge flow path and positioned between the outlet filter and the second container, the flow rate pump being configured to adjust a flow rate of the liquid-phase recovery fluid that has passed through the outlet filter.

In addition, a gas separation system may be provided in which the circulation flow path unit includes a fourth circulation flow path fluidically connected to the second container and the first circulation flow path, and the gas-phase mixed fluid remaining in the liquid-phase recovery fluid introduced into the second container flows along the fourth circulation flow path and re-enters the first circulation flow path.

In addition, according to an aspect of the present invention, a gas separation system is provided, comprising a fluid separation unit configured to receive a gas-phase mixed fluid from the outside and to separate the received gas-phase mixed fluid into a gas-phase recovery fluid and a gas-phase discharge fluid; and a fluid collection unit fluidically connected to the fluid separation unit to receive and collect the separated gas-phase recovery fluid, wherein a downstream side of the fluid separation unit is positioned higher than an upper side of the fluid collection unit such that the separated recovery fluid flows in a direction from an upper side toward a lower side and is collected in the fluid collection unit.

In addition, according to an aspect of the present invention, a gas separation system is provided, comprising a fluid separation unit configured to receive a gas-phase mixed fluid from an external first container and to separate the received gas-phase mixed fluid into a gas-phase recovery fluid and a gas-phase discharge fluid; and a fluid collection unit fluidically connected to the fluid separation unit to receive and collect the separated gas-phase recovery fluid, wherein a lower side of the fluid collection unit is positioned higher than an external second container such that the recovery fluid collected in the fluid collection unit is accommodated in the second container in a direction from an upper side toward a lower side.

In addition, according to an aspect of the present invention, a gas separation system is provided, comprising an inlet/outlet flow path unit configured to receive a gas-phase mixed fluid from the outside and to deliver, to the outside, a recovery fluid and a discharge fluid separated from the gas-phase mixed fluid; a plurality of fluid separation units configured to separate the received gas-phase mixed fluid into the gas-phase recovery fluid and the gas-phase discharge fluid; and a circulation flow path unit fluidically connected to the inlet/outlet flow path unit and the fluid separation units, wherein the circulation flow path unit includes a first circulation flow path fluidically connected to the inlet/outlet flow path unit and one of the plurality of fluid separation units, and a second circulation flow path extending between one portion and another portion of the first circulation flow path and fluidically connected to another one of the plurality of fluid separation units, such that the introduced gas-phase mixed fluid flows along the first circulation flow path, passes the one of the fluid separation units, and a gas-phase discharge fluid is at least partially separated, and a portion of the gas-phase mixed fluid that has permeated the one of the fluid separation units flows along the second circulation flow path, passes the another one of the fluid separation units, and, after a gas-phase discharge fluid is additionally separated, re-enters the first circulation flow path.

In this case, a gas separation system may be provided in which the one portion of the first circulation flow path is positioned between a point at which the first circulation flow path is connected to the inlet/outlet flow path unit and one of the fluid separation units.

In addition, a gas separation system may be provided in which the second circulation flow path is fluidically connected to one of the fluid separation units, and another one of the fluid separation units is positioned between the one portion of the first circulation flow path and the one of the fluid separation units.

In this case, a gas separation system may be provided in which the gas separation system further includes a fluid collection unit fluidically connected to the first circulation flow path, positioned downstream of the one of the fluid separation units, and configured to cool a remainder of the gas-phase mixed fluid that has passed the one of the fluid separation units so as to cause a phase change of the recovery fluid into a liquid phase and to collect the recovery fluid.

In addition, a gas separation system may be provided in which the fluid collection unit includes a fluid collection cylinder fluidically connected to the first circulation flow path to receive and accommodate the remainder of the gas-phase mixed fluid, and a cooling device connected to the fluid collection cylinder and configured to provide a refrigerant that cools the remainder of the gas-phase mixed fluid such that the recovery fluid undergoes a phase change to a liquid phase.

In this case, a gas separation system may be provided in which the circulation flow path unit includes a third circulation flow path fluidically connected to the fluid collection cylinder and the first circulation flow path, and a portion of the gas-phase mixed fluid remaining in the liquid-phase recovery fluid accommodated in the fluid collection cylinder and not having undergone a phase change flows along the third circulation flow path and re-enters the first circulation flow path.

In addition, a gas separation system may be provided in which the inlet/outlet flow path unit includes a recovery fluid outlet flow path fluidically connected to the fluid collection cylinder and an external container, and the liquid-phase recovery fluid that has undergone a phase change in the fluid collection cylinder is discharged along the recovery fluid outlet flow path to the external container.

In this case, a gas separation system may be provided in which the gas separation system further includes an outlet filter positioned between the fluid collection cylinder and the container, fluidically connected to the recovery fluid outlet flow path, and configured to separate the gas-phase discharge fluid remaining in the liquid-phase recovery fluid, and the inlet/outlet flow path unit includes a separated fluid discharge flow path fluidically connected to the outlet filter to define a flow path through which the separated gas-phase discharge fluid is discharged to the outside.

In addition, a gas separation system may be provided in which the circulation flow path unit includes a fourth circulation flow path fluidically connected to the container and the first circulation flow path, and the gas-phase mixed fluid remaining in the liquid-phase recovery fluid introduced into the container flows along the fourth circulation flow path and re-enters the first circulation flow path.

In addition, according to an aspect of the present invention, a gas separation system is provided, comprising a fluid separation unit configured to receive a gas-phase mixed fluid from the outside and to separate the received gas-phase mixed fluid into a gas-phase recovery fluid and a gas-phase discharge fluid; and a circulation flow path unit fluidically connected to the fluid separation unit, wherein the circulation flow path unit includes a first circulation flow path fluidically connected to the outside and the fluid separation unit, and a second circulation flow path fluidically connected to the fluid separation unit and the first circulation flow path, such that the introduced gas-phase mixed fluid flows along the first circulation flow path, passes the fluid separation unit, and the gas-phase discharge fluid is at least partially separated, and a portion of the gas-phase mixed fluid that has permeated the fluid separation unit flows along the second circulation flow path, passes the first circulation flow path and the fluid separation unit again, and the gas-phase discharge fluid is additionally separated.

In addition, according to an aspect of the present invention, a gas separation system is provided, comprising a plurality of fluid separation units configured to receive a gas-phase mixed fluid from the outside and to separate the received gas-phase mixed fluid into a gas-phase recovery fluid and a gas-phase discharge fluid; and a circulation flow path unit fluidically connected to the plurality of fluid separation units, wherein the circulation flow path unit includes a first circulation flow path fluidically connected to the outside and one of the plurality of fluid separation units, and a second circulation flow path extending between the one of the fluid separation units and the first circulation flow path and fluidically connected to another one of the plurality of fluid separation units, such that a portion of the introduced gas-phase mixed fluid flows along the first circulation flow path, passes the one of the fluid separation units, and is introduced again into the first circulation flow path, and a remainder of the introduced gas-phase mixed fluid flows along the second circulation flow path, passes the another one of the fluid separation units, and flows through the second circulation flow path to re-enter the first circulation flow path.

In addition, according to an aspect of the present invention, a gas separation method is provided, comprising: (a) introducing a gas-phase mixed fluid in which a recovery fluid and a discharge fluid are mixed into an inlet/outlet flow path unit; (b) at least partially separating a gas-phase recovery fluid from the gas-phase mixed fluid by a fluid separation unit; (c) collecting, by a fluid collection unit, the gas-phase recovery fluid that has passed through the fluid separation unit, and allowing a gas-phase residual fluid that has permeated the fluid separation unit to flow along a circulation flow path unit and to be delivered again to the fluid separation unit; and (d) discharging and recovering a liquid-phase recovery fluid collected in the fluid collection unit.

In this case, a gas separation method may be provided in which the step (a) includes (a1) seating a first container accommodating the gas-phase mixed fluid on a weighing member; (a2) applying a transfer force to a mixed fluid inlet flow path by an inlet transfer force applying device; (a3) fluidically connecting the first container to the mixed fluid inlet flow path; and (a4) introducing the gas-phase mixed fluid into the mixed fluid inlet flow path by the transfer force.

In addition, a gas separation method may be provided in which the step (b) includes (b1) allowing the gas-phase mixed fluid to flow along a first circulation flow path to a first fluid separation unit; and (b2) allowing the gas-phase recovery fluid to pass through the first fluid separation unit and allowing a gas-phase residual fluid to permeate the first fluid separation unit and be separated.

In this case, a gas separation method may be provided in which the step (b) further includes, prior to the step (b1), (b0) controlling, by a flow control module, at least one of a pressure adjustment member and a flow rate adjustment member disposed on the first circulation flow path such that a pressure and a flow rate of the gas-phase mixed fluid are adjusted, wherein the step (b0) includes (b01) receiving pressure information and flow rate information of the gas-phase mixed fluid flowing in the first circulation flow path; (b02) comparing preset pressure information with the received pressure information and controlling the pressure adjustment member such that the pressure is complementarily adjusted by a difference value; and (b03) comparing preset flow rate information with the received flow rate information and controlling the flow rate adjustment member such that the flow rate is complementarily adjusted by a difference value.

In addition, a gas separation method may be provided in which the step (b) further includes, prior to the step (b2), (b2') adjusting a temperature of the first fluid separation unit by a fluid separation unit control module, wherein the step (b2') includes (b21') receiving temperature information of the first fluid separation unit; and (b22') comparing preset temperature information with the received temperature information and controlling a temperature adjustment member provided in the first fluid separation unit such that the temperature is complementarily adjusted by a difference value.

In this case, a gas separation method may be provided in which the step (c) includes (c1) collecting the gas-phase recovery fluid in a fluid collection cylinder after a phase change; and (c2) allowing the gas-phase residual fluid to flow along the circulation flow path unit and to be delivered again to the fluid separation unit.

In addition, a gas separation method may be provided in which the step (c1) includes (c11) introducing the gas-phase recovery fluid into the fluid collection cylinder; (c12) cooling the fluid collection cylinder by a cooling device such that the gas-phase recovery fluid undergoes a phase change to a liquid phase; and (c13) allowing the liquid-phase recovery fluid to fall to a lower side of the fluid collection cylinder and be collected.

In this case, a gas separation method may be provided in which the step (c2) includes (c21) allowing the gas-phase residual fluid to flow along a second circulation flow path to a second fluid separation unit; (c22) allowing the gas-phase recovery fluid to pass through the second fluid separation unit and allowing the gas-phase discharge fluid to permeate the second fluid separation unit and be separated; (c23) reintroducing the separated gas-phase recovery fluid into the first circulation flow path and delivering the gas-phase recovery fluid again to the first fluid separation unit; and (c24) allowing the gas-phase discharge fluid to flow along a first separated fluid discharge flow path and be discharged to the outside.

In addition, a gas separation method may be provided in which the step (c2) further includes, prior to the step (c22), (c22') adjusting a temperature of the second fluid separation unit by the fluid separation unit control module, wherein the step (c22') includes (c221') receiving temperature information of the second fluid separation unit; and (c222') comparing preset temperature information with the received temperature information and controlling a temperature adjustment member provided in the second fluid separation unit such that the temperature is complementarily adjusted by a difference value.

In this case, a gas separation method may be provided in which the step (c1) further includes (c14) allowing the gas-phase discharge fluid remaining in the gas-phase recovery fluid to flow along a third circulation flow path and to be reintroduced into the first circulation flow path and delivered again to the fluid separation unit.

In addition, a gas separation method may be provided in which the step (d) includes (d1) allowing the liquid-phase recovery fluid collected in the fluid collection cylinder to flow along a recovery fluid outlet flow path; (d2) allowing the gas-phase discharge fluid remaining in the liquid-phase recovery fluid to permeate an outlet filter disposed on the recovery fluid outlet flow path and be separated; and (d3) allowing the liquid-phase recovery fluid to flow along the recovery fluid outlet flow path and be accommodated in a second container.

In this case, a gas separation method may be provided in which the step (d1) includes (d11) generating, by a liquid level sensor, sensing information on a level of a liquid surface of the liquid-phase recovery fluid collected in the fluid collection cylinder; and (d12) comparing the generated sensing information with preset reference height information by the flow control module.

In addition, a gas separation method may be provided in which the step (d1) further includes, after the step (d12), (d13) opening, by the flow control module, the recovery fluid outlet flow path by controlling a valve member when the generated sensing information is equal to or greater than the reference height information; and (d14) controlling, by a transfer force applying unit control module, a discharge transfer force applying device to operate.

In this case, a gas separation method may be provided in which the step (d1) further includes, after the step (d12), (d15) closing, by the flow control module, the recovery fluid outlet flow path by controlling the valve member when the generated sensing information is less than the reference height information; and (d16) controlling, by the transfer force applying unit control module, the discharge transfer force applying device to stop.

In addition, a gas separation method may be provided in which the step (d2) includes (d21) controlling, by the transfer force applying unit control module, a flow rate pump such that a flow rate of the liquid-phase recovery fluid is adjusted; (d22) allowing the liquid-phase recovery fluid to flow at a preset flow rate and to be introduced into the outlet filter; (d23) allowing the remaining gas-phase discharge fluid to permeate the outlet filter and to flow along a second separated fluid discharge flow path and be discharged to the outside; and (d24) allowing the liquid-phase recovery fluid to pass through the outlet filter and to continue to flow along the recovery fluid outlet flow path.

In this case, a gas separation method may be provided in which the step (d3) includes (d31) accommodating the liquid-phase recovery fluid in the second container; and (d32) allowing the gas-phase discharge fluid remaining in the liquid-phase recovery fluid to flow along a fourth circulation flow path and to be reintroduced into the first circulation flow path and delivered again to the fluid separation unit.

### ADVANTAGEOUS EFFECT

According to the above-described configuration, a gas separation system and a gas separation method using the same according to an embodiment of the present invention can efficiently separate a recovery-target fluid from a mixed fluid.

In addition, according to the above-described configuration, the gas separation system and the gas separation method using the same according to an embodiment of the present invention allow the recovery-target fluid to undergo a separation process multiple times.

In addition, according to the above-described configuration, the gas separation system and the gas separation method using the same according to an embodiment of the present invention can improve separation efficiency of the recovery-target fluid.

In addition, according to the above-described configuration, the gas separation system and the gas separation method using the same according to an embodiment of the present invention enable the recovery-target fluid to be efficiently collected and recovered.

In addition, according to the above-described configuration, the gas separation system and the gas separation method using the same according to an embodiment of the present invention allow a remaining recovery-target fluid to undergo the separation process again.

Advantageous effects of the present invention are not limited to the above-described effects, and should be understood to include all effects that can be inferred from the configuration of the invention described in the detailed description or claims of the present invention.

### BRIEF DESCRIPTION OF THE DRAWINGS

FIG. 1 is a block diagram illustrating a configuration of a gas separation system according to an embodiment of the present invention.
FIG. 2 is a diagram illustrating coupling relationships among components of the gas separation system of FIG. 1.
FIG. 3 is a diagram illustrating various flows formed in the gas separation system of FIG. 1.
FIG. 4 is a perspective view illustrating a first fluid separation unit provided in the gas separation system of FIG. 1.
FIG. 5 is a perspective view illustrating a second fluid separation unit provided in the gas separation system of FIG. 1.
FIG. 6 is a conceptual diagram illustrating a fluid collection unit provided in the gas separation system of FIG. 1.
FIG. 7 is a conceptual diagram illustrating height relationships among respective components provided in the gas separation system of FIG. 1.
FIG. 8 is a front view illustrating an enclosure accommodating the gas separation system of FIG. 1.
FIG. 9 is a rear view illustrating the enclosure of FIG. 8.
FIG. 10 is a side view illustrating the enclosure of FIG. 8.
FIG. 11 is a flowchart illustrating a flow of a gas separation method using the gas separation system of FIG. 1.
FIG. 12 is a flowchart illustrating a detailed flow of step S100 of the gas separation method of FIG. 11.
FIG. 13 is a flowchart illustrating a detailed flow of step S200 of the gas separation method of FIG. 11.
FIG. 14 is a flowchart illustrating a detailed flow of step S210 of the gas separation method of FIG. 13.
FIG. 15 is a flowchart illustrating a detailed flow of step S230 of the gas separation method of FIG. 13.
FIG. 16 is a flowchart illustrating a detailed flow of step S300 of the gas separation method of FIG. 11.
FIG. 17 is a flowchart illustrating a detailed flow of step S310 of the gas separation method of FIG. 16.
FIG. 18 is a flowchart illustrating a detailed flow of step S320 of the gas separation method of FIG. 16.
FIG. 19 is a flowchart illustrating a detailed flow of step S322 of the gas separation method of FIG. 18.
FIG. 20 is a flowchart illustrating a detailed flow of step S400 of the gas separation method of FIG. 11.
FIG. 21 is a flowchart illustrating a detailed flow of step S410 of the gas separation method of FIG. 20.
FIG. 22 is a flowchart illustrating a detailed flow of step S420 of the gas separation method of FIG. 20.
FIG. 23 is a flowchart illustrating a detailed flow of step S430 of the gas separation method of FIG. 20.

### MODES OF THE INVENTION

Hereinafter, exemplary embodiments of the present invention will be described in detail so that those of ordinary skill in the art can readily implement the present invention with reference to the accompanying drawings. The present invention may be embodied in many different forms and is not limited to the embodiments set forth herein. Portions irrelevant to the description have been omitted for clarity of explanation of the present invention, and throughout the specification, the same reference numerals are used to denote identical or similar components.

The words and terms used in the present specification and claims should not be interpreted as being limited to their ordinary or dictionary meanings, but should be construed as having meanings and concepts consistent with the technical spirit of the present invention, in accordance with the principle that an inventor may define terms and concepts to best describe their invention.

Accordingly, the embodiments described in the present specification and the configurations shown in the drawings correspond to preferred embodiments of the present invention, and do not represent all the technical spirit of the present invention, so the configurations may have various examples of equivalent and modification that can replace them at the time of filing the present invention.

In the following description, explanations of some components may be omitted to clarify the features of the present invention.

The term "fluid communication" used in the following description refers to a state in which one or more members are connected so as to allow fluid flow between them. In an embodiment, the fluid communication may be established by members such as conduits, pipes, or tubes.

The term "electrical connection" used in the following description refers to a state in which one or more members are connected so as to allow the transmission of electric current or electrical signals between them, and may be variously referred to as "electrical connection," "energization," "energizable connection," "electrically connected state," "enabled current flow," "current-conducting state," or "electrical conduction." In an embodiment, the electrical connection may be established in a wired form using a wire member or the like, or in a wireless form using Bluetooth, Wi-Fi, RFID, or the like.

The term "fluid" used in the following description refers to a substance in any state whose shape may be deformed by external pressure, temperature, or the like. In an embodiment, the fluid may be provided in a liquid state or a gaseous state.

The term "mixed fluid" described below refers to any fluid supplied to the gas separation system 10 and subjected to a separation process. In an embodiment, the mixed fluid may be composed of a fluid in a gaseous state discharged from an external device such as a gas insulated switchgear.

The term "recovery fluid" used in the following description refers to a fluid, among fluids mixed in the mixed fluid, that is a target to be collected and recovered. In an embodiment in which the mixed fluid is provided as a fluid discharged from a gas insulated switchgear, the recovery fluid may refer to an insulating gas. In this embodiment, the recovery fluid may be C₄ F₇N or C₅F_{1 0}O or the like.

In this embodiment, the recovery fluid may be in a gas phase. In addition, the recovery fluid may undergo a phase change into a liquid phase and be collected and recovered.

The term "discharge fluid" used in the following description refers to the remaining fluid among fluids mixed in the mixed fluid, excluding the recovery fluid. In an embodiment in which the mixed fluid is provided as a fluid discharged from a gas insulated switchgear, the discharge fluid may be a gaseous-phase fluid excluding the insulating gas, such as oxygen or carbon dioxide.

The term "residual fluid" used in the following description refers to a remaining fluid obtained after the recovery fluid is at least partially separated from the mixed fluid provided from the outside. The residual fluid may be in a state in which a portion of the recovery fluid remains, or in a state in which the recovery fluid is completely removed. In an embodiment in which the mixed fluid is provided as a fluid discharged from a gas insulated switchgear, the residual fluid may refer to other fluids excluding the insulating gas, such as oxygen or hydrogen, or a fluid in which the other fluids are mixed with the recovery fluid.

The term "permeates the fluid separation unit 300" used in the following description refers to a state in which a fluid flows by passing through a membrane or the like. The discharge fluid may be composed of a membrane-permeable material (permeate), and after passing through a membrane provided in the fluid separation unit 300 to be described later, the discharge fluid may be discharged from the fluid separation unit 300.

In addition, the term "passes through the fluid separation unit 300" used in the following description refers to a state in which a fluid does not pass through the membrane and flows along the membrane. The recovery fluid may be composed of a membrane-impermeable material (retentate), and may not pass through the membrane provided in the fluid separation unit 300 to be described later but may flow along the membrane and be discharged from the fluid separation unit 300.

Further, the term "passes the fluid separation unit 300" used in the following description may be used as a concept encompassing both the term "permeates the fluid separation unit 300" and the term "passes through the fluid separation unit 300." That is, an expression that a fluid passes the fluid separation unit 300 includes both a case in which the fluid permeates the fluid separation unit 300 and a case in which the fluid passes through the fluid separation unit 300 without permeating the membrane.

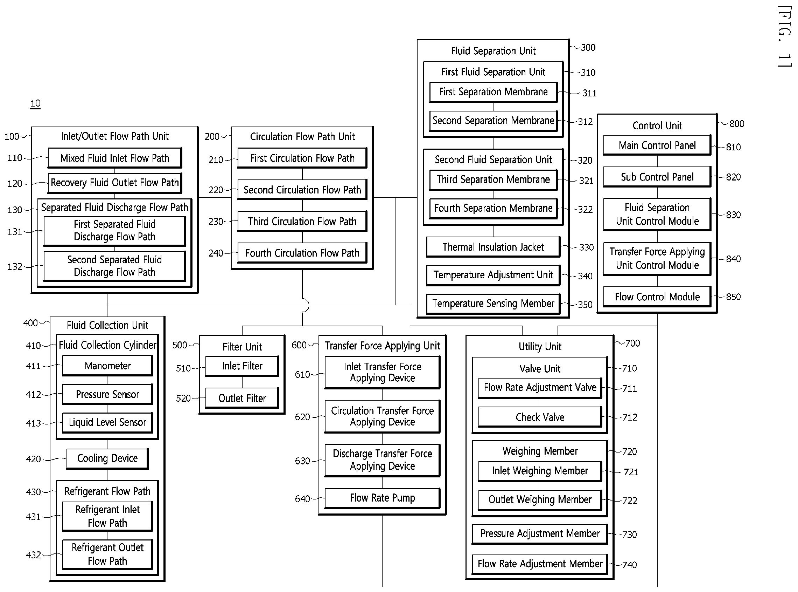

Referring to FIGS. 1 to 3, a configuration of a gas separation system 10 according to an embodiment of the present invention and connection relationships among respective components are exemplarily illustrated. The gas separation system 10 according to the illustrated embodiment is configured to receive a mixed fluid from an external device and to separate the mixed fluid into a plurality of fluids. The separated plurality of fluids may be discharged to the outside through different paths. In this case, among the separated plurality of fluids, at least some fluids may be discharged to the outside in a gas phase, while other fluids may be discharged to the outside in a liquid phase.

Accordingly, one fluid mixed in the mixed fluid may be separated from other fluids and supplied again to an external device. As a result, a recovery efficiency of the one fluid mixed in the mixed fluid may be increased, thereby reducing an amount of the one fluid that needs to be newly provided to be supplied to the external device.

Accordingly, a monetary cost required for operation of the external device may be reduced. In addition, as the recovery efficiency of the one fluid is improved, the amount of the one fluid newly provided may also be reduced, thereby preventing environmental pollution.

In addition, the gas separation system 10 according to an embodiment of the present invention may be configured such that the received mixed fluid is discharged to the outside after undergoing at least one separation process. Accordingly, separation efficiency of the recovery fluid from the mixed fluid may be improved. In addition, purity of the separated recovery fluid may also be increased.

Furthermore, the gas separation system 10 according to an embodiment of the present invention may collect the recovery fluid separated and collected from the mixed fluid in a gas phase by changing a phase of the recovery fluid into a phase that is easy to collect, for example, a liquid phase. Accordingly, the gas separation system 10 may easily collect and accommodate the recovery fluid that is a target to be recovered.

Furthermore, the gas separation system 10 according to an embodiment of the present invention may re-separate and collect the recovery fluid remaining in a residual fluid from which the recovery fluid has been at least partially separated. Accordingly, an amount of the recovery fluid recovered by the gas separation system 10 may be increased.

Hereinafter, respective components of the gas separation system 10 described below are in fluid communication with each other, such that at least one of a mixed fluid, a recovery fluid, a discharge fluid, and a residual fluid may flow therein.

In addition, electric power and control signals required for operation of respective components of the gas separation system 10 may be supplied from an external power source (not shown), a control unit 800, or the like. Respective components of the gas separation system 10, particularly a transfer force applying unit 600 and a utility unit 700 that require electric power and control signals, are electrically connectable to the external power source (not shown) and the control unit 800.

In the illustrated embodiment, the gas separation system 10 includes an inlet/outlet flow path unit 100, a circulation flow path unit 200, a fluid separation unit 300, a fluid collection unit 400, a filter unit 500, a transfer force applying unit 600, a utility unit 700, and a control unit 800.

The inlet/outlet flow path unit 100 is a component through which the gas separation system 10 is in communication with the outside. A mixed fluid collected from an external device may be supplied to the gas separation system 10 through the inlet/outlet flow path unit 100. In addition, respective fluids separated from the mixed fluid by the gas separation system 10 may be discharged or recovered to the outside through the inlet/outlet flow path unit 100.

In the illustrated embodiment, the inlet/outlet flow path unit 100 is in fluid communication with external containers C1 and C2. An upstream side of the inlet/outlet flow path unit 100 (that is, a mixed fluid inlet flow path 110) is in fluid communication with a first container C1 accommodating the mixed fluid. A portion of a downstream side of the inlet/outlet flow path unit 100 (that is, a recovery fluid outlet flow path 120) is in fluid communication with a second container C2 accommodating the recovery fluid. Another portion of the downstream side of the inlet/outlet flow path unit 100 (that is, a separated fluid discharge flow path 130) is open and in communication with the outside.

The inlet/outlet flow path unit 100 is in fluid communication with the circulation flow path unit 200. The mixed fluid in a gas phase introduced into the inlet/outlet flow path unit 100 may flow along the circulation flow path unit 200, during which the recovery fluid may be separated. As will be described later, the mixed fluid introduced through the inlet/outlet flow path unit 100 may undergo at least one separation process, during which the recovery fluid may be separated.

The inlet/outlet flow path unit 100 may be provided in any form capable of being fluidically connected to the external containers C1 and C2 and the circulation flow path unit 200, respectively. In an embodiment, the inlet/outlet flow path unit 100 may be provided in the form of a steel pipe, a pipe, a tube, or the like made of stainless steel.

In the illustrated embodiment, the inlet/outlet flow path unit 100 includes the mixed fluid inlet flow path 110, the recovery fluid outlet flow path 120, and the separated fluid discharge flow path 130.

The mixed fluid inlet flow path 110 constitutes a portion of the inlet/outlet flow path unit 100. The mixed fluid inlet flow path 110 is a portion through which the gas separation system 10 is in communication with the outside to receive the mixed fluid in a gas phase. The mixed fluid inlet flow path 110 is fluidically connected to the external first container C1 accommodating the mixed fluid in a gas phase. In the illustrated embodiment, an upstream end of the mixed fluid inlet flow path 110 is fluidically connected to the first container C1.

The mixed fluid inlet flow path 110 is in fluid communication with the circulation flow path unit 200. Specifically, the mixed fluid inlet flow path 110 is fluidically connected to a first circulation flow path 210, such that the introduced mixed fluid in a gas phase may flow into the first circulation flow path 210. In the illustrated embodiment, a downstream end of the mixed fluid inlet flow path 110 is fluidically connected to the first circulation flow path 210.

A flow rate control valve 711 of the utility unit 700 is disposed on the mixed fluid inlet flow path 110. A flow rate of each fluid flowing in the mixed fluid inlet flow path 110 may be controlled by the flow rate control valve 711. Accordingly, a flow rate of the mixed fluid in a gas phase flowing into the first circulation flow path 210 via the mixed fluid inlet flow path 110 may be controlled.

The recovery fluid outlet flow path 120 constitutes another portion of the inlet/outlet flow path unit 100. The recovery fluid outlet flow path 120 is a portion through which the gas separation system 10 is in communication with the outside to provide a recovery fluid in a liquid phase, separated from the mixed fluid, to the outside.

The recovery fluid outlet flow path 120 is fluidically connected to a component configured to change a phase of the separated recovery fluid into a liquid phase, that is, a fluid collection cylinder 410. The recovery fluid in a liquid phase collected in the fluid collection cylinder 410 may be introduced into the recovery fluid outlet flow path 120. In the illustrated embodiment, an upstream side of the recovery fluid outlet flow path 120 is fluidically connected to a lower side of the fluid collection cylinder 410.

The recovery fluid outlet flow path 120 is fluidically connected to the second container C2 accommodating the recovery fluid. In the illustrated embodiment, a downstream side of the recovery fluid outlet flow path 120 is fluidically connected to the second container C2.

The recovery fluid outlet flow path 120 is fluidically connected to a second separated fluid discharge flow path 132. Specifically, the recovery fluid outlet flow path 120 is fluidically connected to the second separated fluid discharge flow path 132 via an outlet filter 520. A gaseous discharge fluid partially remaining in the recovery fluid in a liquid phase discharged from the fluid collection cylinder 410 may be filtered by the outlet filter 520 and discharged to the outside through the second separated fluid discharge flow path 132.

A flow rate pump 640 is disposed on the recovery fluid outlet flow path 120. The flow rate pump 640 is positioned between the outlet filter 520 and the second container C2, and is configured to apply a transfer force to the recovery fluid in a liquid phase collected in the fluid collection cylinder 410 and to control a flow rate of the flowing recovery fluid in a liquid phase.

A flow rate control valve 711 of the utility unit 700 is disposed on the recovery fluid outlet flow path 120. A flow rate of each fluid flowing in the recovery fluid outlet flow path 120 may be controlled by the flow rate control valve 711. Accordingly, a flow rate of the recovery fluid in a liquid phase flowing along the recovery fluid outlet flow path 120 and a gaseous discharge fluid remaining therein may be controlled.

The separated fluid discharge flow path 130 constitutes a remaining portion of the inlet/outlet flow path unit 100. The separated fluid discharge flow path 130 is a portion through which the gas separation system 10 is in communication with the outside to discharge a gaseous discharge fluid separated from the mixed fluid to the outside. The separated fluid discharge flow path 130 is in communication with the outside. In the illustrated embodiment, a downstream end of the separated fluid discharge flow path 130 is open and in communication with the outside. Accordingly, the gaseous discharge fluid may be discharged into the atmosphere without being separately collected.

The separated fluid discharge flow path 130 is in fluid communication with the recovery fluid outlet flow path 120. Specifically, the separated fluid discharge flow path 130 is in fluid communication with the recovery fluid outlet flow path 120 via the outlet filter 520. The gaseous discharge fluid remaining in the recovery fluid in a liquid phase flowing on the recovery fluid outlet flow path 120 may be filtered by the outlet filter 520 and discharged to the outside through the separated fluid discharge flow path 130.

The separated fluid discharge flow path 130 is in fluid communication with the circulation flow path unit 200. The gaseous discharge fluid separated while passing the fluid separation unit 300 disposed in the circulation flow path unit 200 may be discharged to the outside through the separated fluid discharge flow path 130.

A plurality of separated fluid discharge flow paths 130 may be provided. The plurality of separated fluid discharge flow paths 130 may be fluidically connected to the recovery fluid outlet flow path 120 and the circulation flow path unit 200, respectively. In the illustrated embodiment, the separated fluid discharge flow path 130 includes a first separated fluid discharge flow path 131 and a second separated fluid discharge flow path 132.

The first separated fluid discharge flow path 131 is fluidically connected to the circulation flow path unit 200 to constitute a discharge flow path through which the gaseous discharge fluid separated by the fluid separation unit 300 is discharged to the outside. The first separated fluid discharge flow path 131 is fluidically connected to a second fluid separation unit 320 that is fluidically connected to a second circulation flow path 220. The gaseous discharge fluid separated while passing the second fluid separation unit 320 may be discharged to the outside through the first separated fluid discharge flow path 131.

In the illustrated embodiment, an upstream end of the first separated fluid discharge flow path 131 is fluidically connected to the second fluid separation unit 320, and a downstream end of the first separated fluid discharge flow path 131 is formed to be open.

A flow rate adjustment member 740 of the utility unit 700 is disposed on the first separated fluid discharge flow path 131. The flow rate adjustment member 740 is configured to control a flow rate of the gaseous discharge fluid discharged along the first separated fluid discharge flow path 131.

The second separated fluid discharge flow path 132 is fluidically connected to the recovery fluid outlet flow path 120 to constitute a discharge flow path through which the gaseous discharge fluid separated by the outlet filter 520 is discharged to the outside. The second separated fluid discharge flow path 132 is fluidically connected to the recovery fluid outlet flow path 120 via the outlet filter 520. The gaseous discharge fluid separated while passing the outlet filter 520 may be discharged to the outside through the second separated fluid discharge flow path 132.

**In** the illustrated embodiment, an upstream end of the second separated fluid discharge flow path 132 is fluidically connected to the outlet filter 520, and a downstream end of the second separated fluid discharge flow path 132 is formed to be open.

A discharge transfer force applying device 630 may be disposed on the second separated fluid discharge flow path 132. The discharge transfer force applying device 630 provides a transfer force for discharging the gaseous discharge fluid to the outside along the second separated fluid discharge flow path 132.

A flow rate control valve 711 may be disposed on the second separated fluid discharge flow path 132. A flow rate of the gaseous discharge fluid flowing along the second separated fluid discharge flow path 132 may be controlled by the flow rate control valve 711.

The circulation flow path unit 200 constitutes a flow path through which the mixed fluid in a gas phase introduced therein, the recovery fluid in a gas phase separated therefrom, and a residual fluid in a gas phase from which the recovery fluid in a gas phase has been at least partially separated, flow. The mixed fluid in a gas phase introduced through the inlet/outlet flow path unit 100 may be delivered to and flow in the circulation flow path unit 200. In addition, the recovery fluid in a gas phase separated from the mixed fluid in a gas phase and the residual fluid in a gas phase may flow along the circulation flow path unit 200.

The circulation flow path unit 200 is fluidically connected to the inlet/outlet flow path unit 100. Specifically, the circulation flow path unit 200 is fluidically connected to the mixed fluid inlet flow path 110 to receive the mixed fluid in a gas phase provided from the first container C1. In addition, the circulation flow path unit 200 is fluidically connected to the recovery fluid outlet flow path 120 to deliver the recovery fluid in a gas phase separated from the mixed fluid in a gas phase.

The circulation flow path unit 200 is fluidically connected to the fluid separation unit 300. The mixed fluid in a gas phase flowing in the circulation flow path unit 200 may be separated into the recovery fluid in a gas phase and the residual fluid in a gas phase while passing the fluid separation unit 300. The separated recovery fluid in a gas phase and the residual fluid in a gas phase may flow again in the circulation flow path unit 200.

The circulation flow path unit 200 is fluidically connected to the fluid collection unit 400. The recovery fluid in a gas phase flowing in the circulation flow path unit 200 may be delivered to the fluid collection unit 400. As will be described later, the recovery fluid in a gas phase may undergo a phase change into a liquid phase by the fluid collection unit 400.

The circulation flow path unit 200 is fluidically connected to the filter unit 500. Specifically, an inlet filter 510 is disposed on a component of the circulation flow path unit 200 that is fluidically connected to the mixed fluid inlet flow path 110, that is, the first circulation flow path 210, such that particulate matter remaining in the introduced mixed fluid in a gas phase may be removed.

A flow rate control valve 711 is disposed on the circulation flow path unit 200. A flow rate of each fluid flowing in the circulation flow path unit 200 may be controlled by the flow rate control valve 711. A check valve 713 is disposed on the circulation flow path unit 200. A flow direction of each fluid flowing in the circulation flow path unit 200 may be adjusted by the check valve 713.

The circulation flow path unit 200 may include a plurality of components. Each of the components included in the circulation flow path unit 200 may constitute a flow path through which the mixed fluid in a gas phase, the recovery fluid in a gas phase separated from the mixed fluid in a gas phase, and the residual fluid in a gas phase, flow.

In this case, the components may be fluidically connected to each other such that the mixed fluid in a gas phase and the residual fluid in a gas phase circulate along the circulation flow path unit 200, and the recovery fluid in a gas phase may be separated multiple times by the fluid separation unit 300 and the filter unit 500.

In the illustrated embodiment, the circulation flow path unit 200 includes a first circulation flow path 210, a second circulation flow path 220, a third circulation flow path 230, and a fourth circulation flow path 240.

The first circulation flow path 210 constitutes a portion of the circulation flow path unit 200. The first circulation flow path 210 is fluidically connected to the mixed fluid inlet flow path 110 to receive a gas-phase mixed fluid provided from the first container C1. A first fluid separation unit 310 is disposed on the first circulation flow path 210, and the gas-phase mixed fluid may be separated into a gas-phase recovery fluid and a gas-phase residual fluid while passing through the first fluid separation unit 310.

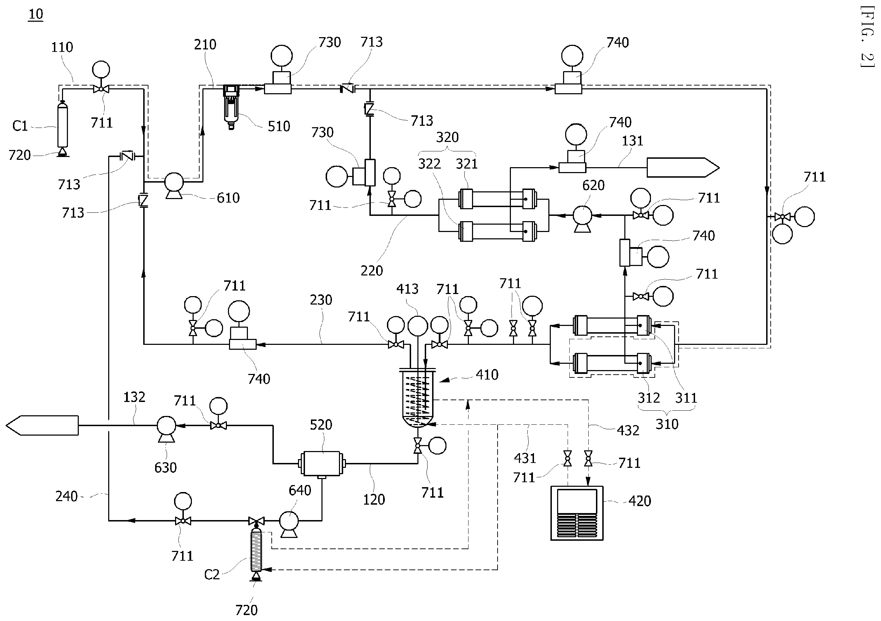

The first circulation flow path 210 is fluidically connected to the mixed fluid inlet flow path 110. In the embodiment illustrated in FIGS. 2 to 3, a flow path connecting the first container C1 and one of the flow rate control valves 711 disposed closest to the first container C1 may be defined as the mixed fluid inlet flow path 110. In this embodiment, the first circulation flow path 210 may extend from the one flow rate control valve 711.

The first circulation flow path 210 is fluidically connected to the second circulation flow path 220. Specifically, the first circulation flow path 210 is fluidically connected to the second circulation flow path 220 through the first fluid separation unit 310.

A gas-phase residual fluid separated from the gas-phase mixed fluid while passing through the first fluid separation unit 310 may flow along the second circulation flow path 220 and be introduced into the second fluid separation unit 320. In addition, the gas-phase residual fluid that has passed through the second fluid separation unit 320, that is, from which a gas-phase discharge fluid has been further separated, may re-enter the first circulation flow path 210.

Accordingly, a portion of the gas-phase mixed fluid flowing along the first circulation flow path 210 may pass through the first fluid separation unit 310 and the second fluid separation unit 320, whereby the gas-phase recovery fluid is separated multiple times.

The first circulation flow path 210 is fluidically connected to the third circulation flow path 230. Specifically, the first circulation flow path 210 is fluidically connected to the third circulation flow path 230 through the fluid collection cylinder 410.

The gas-phase recovery fluid separated while passing through the first fluid separation unit 310 is introduced into the fluid collection cylinder 410. In this case, a portion of the gas-phase residual fluid may remain in the gas-phase recovery fluid introduced into the fluid collection cylinder 410.

As will be described later, the fluid collection cylinder 410 may change a phase of the gas-phase recovery fluid into a liquid phase by cooling or compression. In this case, the residual fluid remains in a gas phase and may flow along the third circulation flow path 230 and re-enter the first circulation flow path 210.

Accordingly, another portion of the gas-phase mixed fluid flowing along the first circulation flow path 210 may pass again through the first fluid separation unit 310 and the second fluid separation unit 320, whereby the gas-phase recovery fluid is separated multiple times.

The first circulation flow path 210 is fluidically connected to the fourth circulation flow path 240. A gas-phase residual fluid remaining in a liquid-phase recovery fluid introduced into the external second container C2 may flow along the fourth circulation flow path 240 and re-enter the first circulation flow path 210. In the illustrated embodiment, an upstream side of the first circulation flow path 210 is fluidically connected to a downstream side of the mixed fluid inlet flow path 110, a downstream side of the third circulation flow path 230, and a downstream side of the fourth circulation flow path 240, respectively.

The first circulation flow path 210 is fluidically connected to the first fluid separation unit 310. The gas-phase mixed fluid flowing along the first circulation flow path 210 flows to the fluid collection cylinder 410 or the second fluid separation unit 320 only after passing through the first fluid separation unit 310.

The first circulation flow path 210 is fluidically connected to the fluid collection cylinder 410. The gas-phase recovery fluid separated while passing through the first fluid separation unit 310 may further flow along the first circulation flow path 210 and be introduced into the fluid collection cylinder 410.

An inlet filter 510 is disposed on the first circulation flow path 210. The gas-phase mixed fluid introduced along the mixed fluid inlet flow path 110 may pass through the inlet filter 510, whereby particulate matter is removed, and then flow along the first circulation flow path 210. In the illustrated embodiment, the inlet filter 510 is disposed adjacent to an upstream end of the first circulation flow path 210.

The first circulation flow path 210 is fluidically connected to an inlet transfer force applying device 610. The gas-phase mixed fluid introduced from the mixed fluid inlet flow path 110 may flow along the first circulation flow path 210 by a transfer force applied by the inlet transfer force applying device 610. In addition, the gas-phase residual fluid that has passed through the second to fourth circulation flow paths 220, 230, and 240 may also flow again to the first fluid separation unit 310 along the first circulation flow path 210 by the transfer force applied by the inlet transfer force applying device 610.

A plurality of flow rate control valves 711 is disposed on the first circulation flow path 210. The plurality of flow rate control valves 711 may each be configured to adjust flow rates of respective gas-phase fluids flowing in the first circulation flow path 210.

A check valve 713 is disposed on the first circulation flow path 210. The check valve 713 may restrict a flow direction of each gas-phase fluid flowing along the first circulation flow path 210. Accordingly, each gas-phase fluid flowing in the first circulation flow path 210 may flow only in a direction from an upstream side toward a downstream side of the first circulation flow path 210.

A pressure adjustment member 730 is disposed on the first circulation flow path 210. Pressures of the gas-phase mixed fluid and the gas-phase residual fluid flowing in the first circulation flow path 210 may be adjusted by the pressure adjustment member 730.

A flow rate adjustment member 740 is disposed on the first circulation flow path 210. Flow rates of the gas-phase mixed fluid and the gas-phase residual fluid flowing in the first circulation flow path 210 may be adjusted by the flow rate adjustment member 740.

The second circulation flow path 220 constitutes another portion of the circulation flow path unit 200. The second circulation flow path 220 is fluidically connected to the first circulation flow path 210 at a plurality of points, thereby defining a flow path for allowing the gas-phase mixed fluid or the gas-phase residual fluid that has flowed through the first circulation flow path 210 to be reintroduced into the first circulation flow path 210 and circulated toward the first fluid separation unit 310.

An upstream end of the second circulation flow path 220 is fluidically connected to the first fluid separation unit 310. A portion of the gas-phase mixed fluid flowing in the first circulation flow path 210 is separated into a gas-phase residual fluid while passing through the first fluid separation unit 310, and the separated gas-phase residual fluid may be introduced into the second circulation flow path 220.

A second fluid separation unit 320 is disposed on the second circulation flow path 220. The second circulation flow path 220 is fluidically connected to the second fluid separation unit 320. The gas-phase residual fluid separated while passing through the first fluid separation unit 310 may flow along the second circulation flow path 220 and then be introduced into the second fluid separation unit 320, whereby separation process of a gas-phase discharge fluid may be performed again.

A downstream end of the second circulation flow path 220 is fluidically connected to the first circulation flow path 210. In this case, a point at which the downstream end of the second circulation flow path 220 is fluidically connected to the first circulation flow path 210 may be located upstream of the first fluid separation unit 310. Accordingly, the gas-phase residual fluid that has been further separated while passing through the second fluid separation unit 320 may be introduced into the first circulation flow path 210 and flow to pass through the first fluid separation unit 310 again.

In another embodiment, a downstream end of the second circulation flow path 220 may be fluidically connected to a portion of the first circulation flow path 210 on an upstream side of the inlet transfer force applying device 610. In this embodiment, the gas-phase residual fluid that has passed through the second circulation flow path 220 may flow into the first circulation flow path 210 more effectively by a transfer force applied by the inlet transfer force applying device 610.

That is, the downstream end of the second circulation flow path 220 may be fluidically connected to any point of the first circulation flow path 210 that is located upstream of the first fluid separation unit 310.

The second circulation flow path 220 is fluidically connected to the first separated fluid discharge flow path 131 through the second fluid separation unit 320. The gas-phase discharge fluid separated while passing through the second fluid separation unit 320 may be discharged to the outside of the gas separation system 10 through the first separated fluid discharge flow path 131.

The second circulation flow path 220 is fluidically connected to a circulation transfer force applying device 620. The gas-phase residual fluid separated in the first fluid separation unit 310 may flow along the second circulation flow path 220 and be introduced into the second fluid separation unit 320 by a transfer force applied by the circulation transfer force applying device 620.

A plurality of flow rate control valves 711 is disposed on the second circulation flow path 220. The plurality of flow rate control valves 711 may each be configured to adjust a flow rate of the gas-phase residual fluid flowing in the second circulation flow path 220.

A check valve 713 is disposed on the second circulation flow path 220. The check valve 713 may restrict a flow direction of each gas-phase fluid flowing along the second circulation flow path 220.

A pressure adjustment member 730 is disposed on the second circulation flow path 220. Pressure of the gas-phase residual fluid flowing in the second circulation flow path 220 may be adjusted by the pressure adjustment member 730.

The third circulation flow path 230 constitutes still another portion of the circulation flow path unit 200. The third circulation flow path 230 is fluidically connected to the first circulation flow path 210 at a plurality of points, thereby defining a flow path for allowing the gas-phase residual fluid that has flowed through the first circulation flow path 210 to be reintroduced into the first circulation flow path 210 and circulated.

An upstream end of the third circulation flow path 230 is fluidically connected to the fluid collection cylinder 410. The gas-phase residual fluid mixed with the gas-phase recovery fluid separated while passing through the first fluid separation unit 310 may be introduced into the third circulation flow path 230. As described above, the gas-phase residual fluid may be easily separated as the gas-phase recovery fluid is liquefied.

A downstream end of the third circulation flow path 230 is fluidically connected to an upstream end of the first circulation flow path 210. The gas-phase residual fluid flowing along the third circulation flow path 230 may be reintroduced into the first circulation flow path 210.

A plurality of flow rate control valves 711 is disposed on the third circulation flow path 230. The plurality of flow rate control valves 711 may each be configured to adjust a flow rate of the gas-phase residual fluid flowing in the third circulation flow path 230.

A check valve 713 is disposed on the third circulation flow path 230. The check valve 713 may restrict a flow direction of each gas-phase fluid flowing along the third circulation flow path 230.

A flow rate adjustment member 740 is disposed on the third circulation flow path 230. Flow rate of the gas-phase residual fluid flowing in the third circulation flow path 230 may be adjusted by the flow rate adjustment member 740.

The fourth circulation flow path 240 constitutes a remaining portion of the circulation flow path unit 200. The fourth circulation flow path 240 is fluidically connected to the second container C2 accommodating the liquid-phase recovery fluid and to the first circulation flow path 210, thereby defining a flow path for allowing the gas-phase residual fluid remaining in the liquid-phase recovery fluid accommodated in the second container C2 to be reintroduced into the first circulation flow path 210 and circulated.

An upstream end of the fourth circulation flow path 240 is fluidically connected to the second container C2 accommodating the liquid-phase recovery fluid. The gas-phase residual fluid accommodated in the second container C2 may be introduced into the fourth circulation flow path 240.

A downstream end of the fourth circulation flow path 240 is fluidically connected to an upstream end of the first circulation flow path 210. The gas-phase residual fluid flowing along the fourth circulation flow path 240 may be reintroduced into the first circulation flow path 210.

A plurality of flow rate control valves 711 is disposed on the fourth circulation flow path 240. The plurality of flow rate control valves 711 may each be configured to adjust a flow rate of the gas-phase residual fluid flowing in the fourth circulation flow path 240.

A check valve 713 is disposed on the fourth circulation flow path 240. The check valve 713 may restrict a flow direction of each gas-phase fluid flowing along the fourth circulation flow path 240.

Accordingly, the gas-phase mixed fluid introduced through the mixed fluid inlet flow path 110 may circulate along the first to fourth circulation flow paths 210, 220, 230, and 240 and pass through the fluid separation unit 300 multiple times. As a result, separation of the gas-phase recovery fluid from the gas-phase mixed fluid may be performed multiple times, thereby improving separation efficiency of the liquid-phase recovery fluid.

A detailed description of a process in which the introduced gas-phase mixed fluid circulates along the circulation flow path unit 200 and the gas-phase recovery fluid is separated multiple times will be described later.

The fluid separation unit 300 substantially performs a function of separating the gas-phase mixed fluid or the gas-phase residual fluid into a gas-phase recovery fluid and a gas-phase discharge fluid. The fluid separation unit 300 is disposed on the circulation flow path unit 200 and is in fluid communication with the circulation flow path unit 200. The gas-phase mixed fluid and the gas-phase residual fluid flowing in the circulation flow path unit 200 may be separated into the gas-phase recovery fluid and the gas-phase discharge fluid, or the gas-phase residual fluid, while passing through the fluid separation unit 300.

The fluid separation unit 300 is fluidically connected to the mixed fluid inlet flow path 110 through the circulation flow path unit 200. The gas-phase mixed fluid introduced through the mixed fluid inlet flow path 110 may be introduced into the fluid separation unit 300.

The fluid separation unit 300 is in fluid communication with the circulation flow path unit 200. Specifically, the fluid separation unit 300 is coupled to and in fluid communication with the first circulation flow path 210 or the second circulation flow path 220 so as to separate the gas-phase recovery fluid from the introduced gas-phase mixed fluid or gas-phase residual fluid.

The fluid separation unit 300 is fluidically connected to the recovery fluid outlet flow path 120 through the fluid collection unit 400. The gas-phase recovery fluid separated while passing through the fluid separation unit 300 is phase-changed into a liquid phase and collected in the fluid collection unit 400, and then may be discharged to the second container C2 through the recovery fluid outlet flow path 120.

The fluid separation unit 300 is fluidically connected to the separated fluid discharge flow path 130. The gas-phase discharge fluid separated while passing through the fluid separation unit 300 may be discharged to the outside through the separated fluid discharge flow path 130.

The fluid separation unit 300 may be configured in any form capable of separating a plurality of gas-phase fluids having different physical and chemical properties. In one embodiment, the fluid separation unit 300 may be provided in the form of a membrane filter including a plurality of hollow fibers.

In this embodiment, among the gas-phase mixed fluid introduced into the fluid separation unit 300, the gas-phase recovery fluid does not pass through the membrane and flows in a longitudinal direction, and thus may be discharged from the fluid separation unit 300. The discharged gas-phase recovery fluid is delivered to the fluid collection unit 400.

In addition, among the gas-phase mixed fluid, the gas-phase discharge fluid may pass through the membrane and flow in a radial direction and be discharged. The discharged gas-phase discharge fluid may be introduced into another fluid separation unit 300 or discharged to the outside.

In one embodiment, the hollow fibers may be manufactured using a super engineering plastic such as polysulfone or polyimide. In this case, the hollow fibers may be manufactured through a spinning process.

In this embodiment, membranes constituting the fluid separation unit 300 may be designed to have different permeabilities and selectivities with respect to various gas-phase fluids.

In this case, fluids introduced into each fluid separation unit 300 may be limited to a gas phase. This is because, in an embodiment in which the fluid separation unit 300 includes membranes, when a liquid-phase fluid is introduced, the membrane may be wetted, thereby degrading separation efficiency of the gas-phase fluid.

A plurality of fluid separation units 300 may be provided. The plurality of fluid separation units 300 may be coupled to and in fluid communication with different circulation flow path units 200, respectively. In addition, the gas-phase mixed fluid or the gas-phase residual fluid may sequentially pass through the plurality of fluid separation units 300, whereby separation process of the gas-phase recovery fluid may be performed multiple times.

In the illustrated embodiment, the fluid separation unit 300 includes a first fluid separation unit 310, a second fluid separation unit 320, a thermal insulation jacket 330, a temperature adjustment member 340, and a temperature sensing member 350.

The first fluid separation unit 310 is coupled to and in fluid communication with the first circulation flow path 210. The first fluid separation unit 310 is configured to receive the gas-phase mixed fluid or the gas-phase residual fluid introduced into the first circulation flow path 210 and to separate the gas-phase recovery fluid and the gas-phase discharge fluid therefrom. The gas-phase mixed fluid introduced into the gas separation system 10 may be separated into the gas-phase recovery fluid and the gas-phase discharge fluid by the first fluid separation unit 310 at least once.

The first fluid separation unit 310 is disposed on the first circulation flow path 210. In this case, the first fluid separation unit 310 may be disposed between the fluid collection cylinder 410 located at a downstream end of the first circulation flow path 210 and a portion at which the first circulation flow path 210 and the second circulation flow path 220 are coupled to each other.

Accordingly, the gas-phase residual fluid that is reintroduced into the first circulation flow path 210 via the second circulation flow path 220 may pass through the first fluid separation unit 310 again and be separated into the gas-phase recovery fluid and the gas-phase discharge fluid.

The first fluid separation unit 310 is fluidically connected to the second circulation flow path 220. The gas-phase residual fluid separated while passing through the first fluid separation unit 310 may flow out to the second circulation flow path 220 and be introduced into the second fluid separation unit 320.

In an embodiment in which the first fluid separation unit 310 is provided in the form of a membrane, the first fluid separation unit 310 may include a plurality of membranes. In the illustrated embodiment, the first fluid separation unit 310 includes two membranes, namely, a first separation membrane 311 and a second separation membrane 312. Alternatively, the first fluid separation unit 310 may include three or more membranes.

The first and second separation membranes 311 and 312 are fluidically connected to the first circulation flow path 210 and the second circulation flow path 220, respectively. The first and second separation membranes 311 and 312 may receive the gas-phase mixed fluid or the gas-phase residual fluid flowing along the first circulation flow path 210 and separate the gas-phase recovery fluid therefrom. The gas-phase residual fluid separated by the first and second separation membranes 311 and 312 may be delivered to the second circulation flow path 220.

The first and second separation membranes 311 and 312 may be fluidically connected in parallel to the first circulation flow path 210 and the second circulation flow path 220. Accordingly, the gas-phase mixed fluid or the gas-phase residual fluid flowing along the first circulation flow path 210 may be divided and introduced into the first and second separation membranes 311 and 312. In addition, the separated gas-phase recovery fluid and the gas-phase residual fluid in the first and second separation membranes 311 and 312 may be discharged to the first circulation flow path 210 and the second circulation flow path 220, respectively.

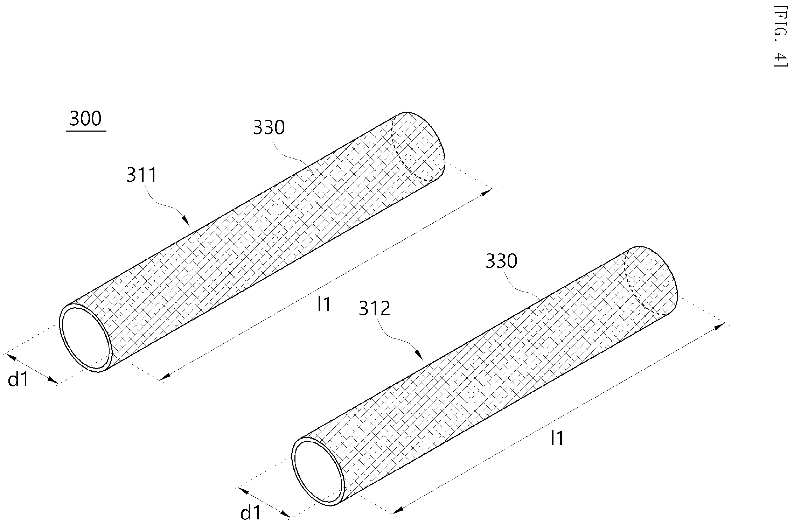

The first and second separation membranes 311 and 312 may have any shape capable of being fluidically connected to the first circulation flow path 210 and the second circulation flow path 220, respectively, and separating a gas-phase recovery fluid from the gas-phase mixed fluid. In the embodiment illustrated in FIG. 4, the first and second separation membranes 311 and 312 each have a cylindrical shape having a first diameter d1 and a first length l1.

The second fluid separation unit 320 is coupled to and in fluid communication with the second circulation flow path 220. The second fluid separation unit 320 is configured to receive the gas-phase residual fluid introduced into the second circulation flow path 220 and to separate, therefrom, a gas-phase recovery fluid and a gas-phase discharge fluid. The gas-phase residual fluid introduced into the second circulation flow path 220 may pass through the second fluid separation unit 320, after which a gas-phase discharge fluid is separated again, and then may flow again along the first circulation flow path 210 and be introduced into the first fluid separation unit 310.

The second fluid separation unit 320 is disposed on the second circulation flow path 220. In this case, the second fluid separation unit 320 may be positioned between the first fluid separation unit 310, which is disposed at an upstream end of the second circulation flow path 220, and a portion at which the first circulation flow path 210 and the second circulation flow path 220 are coupled to each other.

Accordingly, the gas-phase residual fluid that has passed through the first fluid separation unit 310 may be introduced into the second fluid separation unit 320. In addition, the gas-phase residual fluid separated by the second fluid separation unit 320 (that is, from which the gas-phase discharge fluid has been removed again) may be introduced again into the first circulation flow path 210.

In an embodiment in which the second fluid separation unit 320 is provided in the form of a membrane, the second fluid separation unit 320 may include a plurality of membranes. In the illustrated embodiment, the second fluid separation unit 320 includes two membranes, namely, a third separation membrane 321 and a fourth separation membrane 322. Alternatively, the second fluid separation unit 320 may include three or more membranes.

The third and fourth separation membranes 321 and 322 are each fluidically connected to the second circulation flow path 220. The third and fourth separation membranes 321 and 322 may receive the gas-phase mixed fluid or the gas-phase residual fluid flowing along the second circulation flow path 220 and separate a gas-phase recovery fluid therefrom. The gas-phase residual fluid separated by the third and fourth separation membranes 321 and 322 may be delivered to the second circulation flow path 220.

The third and fourth separation membranes 321 and 322 may be fluidically connected to the second circulation flow path 220 in parallel. Accordingly, the gas-phase residual fluid flowing along the second circulation flow path 220 may be divided and introduced into the third and fourth separation membranes 321 and 322. In addition, the gas-phase recovery fluid and the gas-phase residual fluid separated in the third and fourth separation membranes 321 and 322 may be discharged to the second circulation flow path 220, respectively.

The third and fourth separation membranes 321 and 322 are each fluidically connected to the first separated fluid discharge flow path 131. The gas-phase discharge fluid separated in the third and fourth separation membranes 321 and 322 may flow along the first separated fluid discharge flow path 131 and be discharged to the outside of the gas separation system 10.

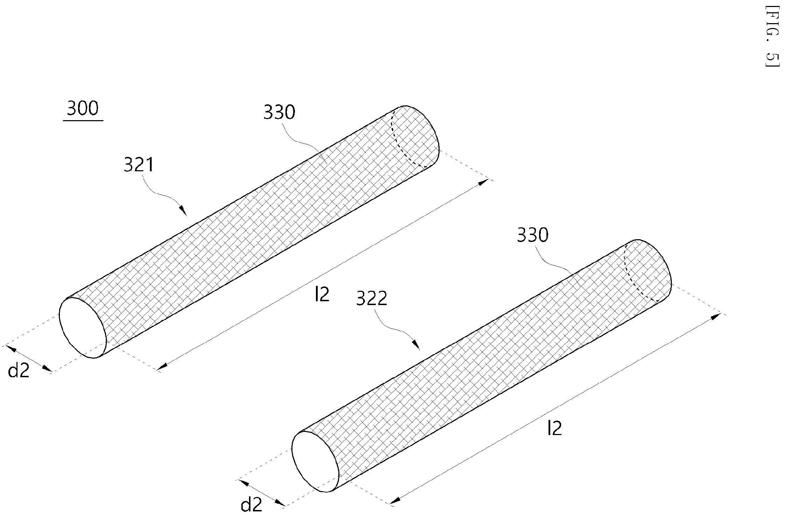

The third and fourth separation membranes 321 and 322 may have any shape capable of being fluidically connected to the second circulation flow path 220 and the first separated fluid discharge flow path 131, respectively, and of again separating a gas-phase recovery fluid from the gas-phase mixed fluid that has passed through the first fluid separation unit 310. In the embodiment illustrated in FIG. 5, the third and fourth separation membranes 321 and 322 each have a cylindrical shape having a second diameter d2 and a second length l2.

In this embodiment, the second diameter d2 may be less than or equal to the first diameter d1, and the second length l2 may be less than or equal to the first length l1. This is because the gas-phase mixed fluid delivered to the second fluid separation unit 320 has already passed through the first fluid separation unit 310 at least once and has had the gas-phase recovery fluid separated at least once, and thus a separation capability equivalent to that of the first fluid separation unit 310 is not required.

Of course, it will be understood that, when the second diameter d2 is formed to be equal to the first diameter d1 and the second length l2 is also formed to be equal to the first length 11, separation efficiency of the gas-phase recovery fluid or the gas-phase discharge fluid from the gas-phase mixed fluid may be maximized.

Meanwhile, as the first fluid separation unit 310 and the second fluid separation unit 320 each include a plurality of separation membranes 311, 312, 321, and 322, a contact area and a contact time between the gas-phase mixed fluid or the gas-phase residual fluid and the first and second fluid separation units 310 and 320 may be adjusted.

That is, when a time during which the gas-phase mixed fluid passes through the first and second fluid separation units 310 and 320 is excessive, a portion of the gas-phase mixed fluid may be liquefied, thereby wetting the separation membranes 311, 312, 321, and 322 and reducing separation efficiency.

Accordingly, in the gas separation system 10 according to the embodiment of the present invention, the first and second fluid separation units 310 and 320 are each configured to include a plurality of separation membranes 311, 312, 321, and 322. As a result, while maintaining a flow rate of the gas-phase mixed fluid passing through the first and second fluid separation units 310 and 320, the contact area and the contact time may be adjusted, thereby preventing the separation membranes 311, 312, 321, and 322 from being wetted by a liquid-phase mixed fluid or a liquid-phase residual fluid.

Meanwhile, an upstream side of the fluid separation unit 300 may be defined as one side into which the gas-phase mixed fluid, the gas-phase residual fluid, the gas-phase discharge fluid, or the gas-phase recovery fluid is introduced. A downstream side of the fluid separation unit 300 may be defined as the other side from which the gas-phase mixed fluid, the gas-phase residual fluid, the gas-phase discharge fluid, or the gas-phase recovery fluid is discharged.

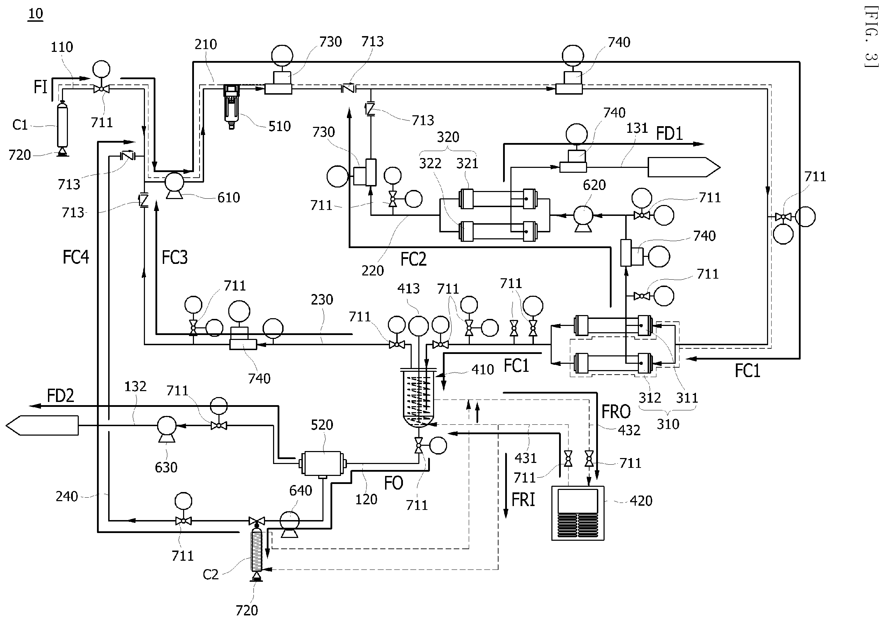

That is, an upstream side of the first fluid separation unit 310 may be defined as one side into which the gas-phase mixed fluid, the gas-phase residual fluid, the gas-phase discharge fluid, or the gas-phase recovery fluid flowing along the first circulation flow path 210 is introduced, which is defined as a right side in the embodiments illustrated in FIGS. 2 and 3. A downstream side of the first fluid separation unit 310 may be defined as the other side from which the gas-phase recovery fluid that has passed through the first fluid separation unit 310 is discharged, which is defined as a left side in the embodiments illustrated in FIGS. 2 and 3.

Similarly, an upstream side of the second fluid separation unit 320 may be defined as one side into which the gas-phase residual fluid flowing along the second circulation flow path 220 is introduced, which is defined as a right side in the embodiments illustrated in FIGS. 2 and 3.

A downstream side of the second fluid separation unit 320 may be defined as the other side from which the gas-phase recovery fluid that has passed through the second fluid separation unit 320 is discharged, which is defined as a right side in the embodiments illustrated in FIGS. 2 and 3.

The thermal insulation jacket 330 is configured to thermally insulate each of the separation membranes 311, 312, 321, and 322 constituting the first fluid separation unit 310 and the second fluid separation unit 320 from the outside. By the thermal insulation jacket 330, liquefaction caused by pressure variations of the gas-phase mixed fluid introduced into the first and second separation membranes 311 and 312 may be minimized. Accordingly, situations in which the first to fourth separation membranes 311, 312, 321, and 322 become wet may be prevented, and thus separation efficiency of the gas-phase mixed fluid may be maintained.

The thermal insulation jacket 330 surrounds outer surfaces of the first to fourth separation membranes 311, 312, 321, and 322. In the illustrated embodiment, the first to fourth separation membranes 311, 312, 321, and 322 are each formed in a cylindrical shape having a circular cross-section and a height in one direction. In this embodiment, the thermal insulation jacket 330 may surround outer circumferential surfaces of the first to fourth separation membranes 311, 312, 321, and 322.

The thermal insulation jacket 330 may be provided in any form capable of thermally insulating the first to fourth separation membranes 311, 312, 321, and 322 from the outside. In one embodiment, the thermal insulation jacket 330 may be provided in a form of styrofoam, thermal insulation tape, ceramic paper, or the like.

The temperature adjustment member 340 is configured to adjust temperatures of the first and second fluid separation units 310 and 320. The temperature adjustment member 340 may be disposed between outer circumferential surfaces of the first to fourth separation membranes 311, 312, 321, and 322 and the thermal insulation jacket 330. In one embodiment, the temperature adjustment member 340 may be disposed to at least partially surround outer circumferential surfaces of the first to fourth separation membranes 311, 312, 321, and 322.

The temperature adjustment member 340 is electrically connectable to a fluid separation unit control module 830 of the control unit 800. The temperature adjustment member 340 may be operated by a control signal applied by the fluid separation unit control module 830 so as to adjust temperatures of the first to fourth separation membranes 311, 312, 321, and 322, respectively.

The temperature adjustment member 340 may be provided in any form capable of cooling or heating the first and second fluid separation units 310 and 320 so as to adjust temperatures of the first to fourth separation membranes 311, 312, 321, and 322.

In one embodiment, the temperature adjustment member 340 may be provided in a form of a pipe through which a heat medium for cooling or heating is allowed to flow, and may at least partially surround outer circumferential surfaces of the first to fourth separation membranes 311, 312, 321, and 322. In this embodiment, the temperature adjustment member 340 may be fluidically connected to an external heat-medium supply source (not illustrated).

In another embodiment, the temperature adjustment member 340 may include a cooling means and a heating means. In this embodiment, the temperature adjustment member 340 may include both a heating wire for heating and a pipe through which a refrigerant for cooling flows.

In any case, it is sufficient that the temperature adjustment member 340 is disposed between outer circumferential surfaces of the first to fourth separation membranes 311, 312, 321, and 322 and the thermal insulation jacket 330 so as to adjust temperatures of the first to fourth separation membranes 311, 312, 321, and 322.

The temperature sensing member 350 is configured to sense temperatures of the first to fourth separation membranes 311, 312, 321, and 322. The temperature sensing member 350 is disposed between outer circumferential surfaces of the first to fourth separation membranes 311, 312, 321, and 322 and the thermal insulation jacket 330. The temperature sensing member 350 may sense temperatures of the first to fourth separation membranes 311, 312, 321, and 322 adjusted by the temperature adjustment member 340.

The temperature sensing member 350 may be provided in any form capable of sensing temperatures of the first to fourth separation membranes 311, 312, 321, and 322. In one embodiment, the temperature sensing member 350 may be provided as a thermocouple temperature sensor, an RTD, a thermistor, an infrared thermometer, a bimetal, or the like.

The temperature sensing member 350 is electrically connectable to the fluid separation unit control module 830. Information on temperatures of the first to fourth separation membranes 311, 312, 321, and 322 sensed by the temperature sensing member 350 may be transmitted to the fluid separation unit control module 830 and may be used to control the temperature adjustment member 340. A detailed description of the above process will be provided later.

The above-described temperature adjustment member 340 and temperature sensing member 350 may each be provided in plural and may be respectively provided for the plurality of separation membranes 311, 312, 321, and 322. Accordingly, it will be understood that temperatures of the plurality of separation membranes 311, 312, 321, and 322 may be independently sensed and adjusted.

The fluid collection unit 400 receives the gas-phase recovery fluid separated by the fluid separation unit 300. The fluid collection unit 400 may cool the received gas-phase recovery fluid to induce a phase change into a liquid phase. Accordingly, the fluid collection unit 400 may easily collect the phase-changed liquid-phase recovery fluid.

To this end, the fluid collection unit 400 may be disposed downstream of the fluid separation unit 300. Specifically, as illustrated in FIGS. 2 and 3, the fluid collection unit 400 is disposed downstream of the fluid separation unit 300 with respect to a first circulation flow FC1 formed along the first circulation flow path 210.

The fluid collection unit 400 is fluidically connected to the inlet/outlet flow path unit 100. The gas-phase recovery fluid collected in the fluid collection unit 400 may flow along the inlet/outlet flow path unit 100 and be accommodated in the second container C2.

The fluid collection unit 400 is fluidically connected to the circulation flow path unit 200. The gas-phase recovery fluid separated while passing through the fluid separation unit 300 may be delivered to the fluid collection unit 400.

In the illustrated embodiment, the fluid collection unit 400 includes a fluid collection cylinder 410, a cooling device 420, and a refrigerant flow path 430.

The fluid collection cylinder 410 receives and collects the separated gas-phase recovery fluid. The fluid collection cylinder 410 may be fluidically connected to the first circulation flow path 210 so as to receive the gas-phase recovery fluid separated by the fluid separation unit 300. In one embodiment, the fluid collection cylinder 410 may be fluidically connected to the first circulation flow path 210 at one side in a height direction, which is an upper side in the illustrated embodiment.

The fluid collection cylinder 410 may deliver the phase-changed and collected liquid-phase recovery fluid to the second container C2. To this end, the fluid collection cylinder 410 may be fluidically connected to the recovery fluid outlet flow path 120. In one embodiment, the fluid collection cylinder 410 may be fluidically connected to the recovery fluid outlet flow path 120 at the other side in the height direction, which is a lower side in the illustrated embodiment.

As described above, the fluid collection unit 400 may induce a phase change of the gas-phase recovery fluid into a liquid phase and collect the same. Accordingly, the gas-phase recovery fluid introduced into an upper side of the fluid collection cylinder 410 may be phase-changed into a liquid phase and fall downward to be collected at a lower side. As a result, the separated gas-phase recovery fluid may be easily introduced into and collected in the fluid collection cylinder 410 and discharged to the second container C2.

The fluid collection cylinder 410 is fluidically connected to the third circulation flow path 230. The gas-phase recovery fluid introduced into the fluid collection cylinder 410 may include a portion of gas-phase residual fluid. When the introduced gas-phase recovery fluid is cooled or compressed to be phase-changed into a liquid phase, the liquid-phase recovery fluid falls downward, whereas the residual fluid may remain in a gas phase. The remaining gas-phase residual fluid may flow out to the third circulation flow path 230 and may flow again along the first circulation flow path 210.

In the illustrated embodiment, the fluid collection cylinder 410 may be fluidically connected to the third circulation flow path 230 at the one side in the height direction, which is the upper side in the illustrated embodiment. Accordingly, the gas-phase residual fluid having a relatively low density may be easily discharged to the third circulation flow path 230.

In the illustrated embodiment, the fluid collection cylinder 410 includes a liquid level indicator 411, a pressure sensor 412, and a liquid level sensor 413.

The liquid level indicator 411 is fluidically connected to the fluid collection cylinder 410. The liquid level indicator 411 is formed to have a height corresponding to that of the fluid collection cylinder 410. In the illustrated embodiment, the liquid level indicator 411 extends in an upward-downward direction, and upper and lower ends thereof are fluidically connected to the fluid collection cylinder 410.

Accordingly, a pressure formed inside the fluid collection cylinder 410 and a pressure formed inside the liquid level indicator 411 are equal to each other. As a result, a fluid height ph formed in the fluid collection cylinder 410 and a fluid height ph formed in the liquid level indicator 411 may be equal to each other.

Accordingly, an operator may easily recognize information on an amount of the recovery fluid collected in the fluid collection cylinder 410, that is, a liquid level of the liquid-phase recovery fluid liquefied and accommodated in the fluid collection cylinder 410, through the liquid level indicator 411.

To this end, the liquid level indicator 411 may be formed of a transparent material so that a user may visually check a liquid level of the liquid-phase recovery fluid formed in the liquid level indicator 411.

The pressure sensor 412 is configured to sense a pressure inside the fluid collection cylinder 410. Information on the pressure sensed by the pressure sensor 412 may be transmitted to and output through a main control panel 810 of the control unit 800.

The liquid level sensor 413 is configured to sense a height of a liquid surface formed by the liquid-phase recovery fluid collected in the fluid collection cylinder 410, that is, a liquid level. The liquid level sensor 413 is electrically connectable to a transfer force applying unit control module 840 so as to transmit information on the sensed liquid level. As will be described later, the transfer force applying unit control module 840 may control a discharge transfer force applying device 630 in response to the information on the sensed liquid level.

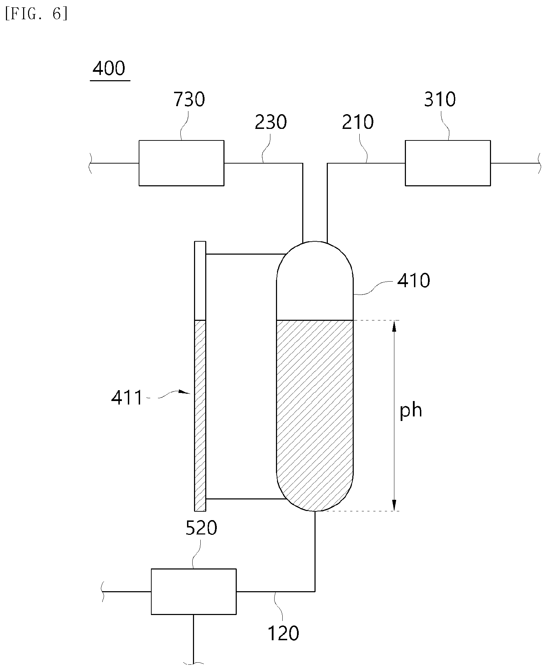

Referring to FIG. 6, a coupling structure of the fluid collection cylinder 410 having a configuration different from that described above is illustrated by way of example.

In the illustrated embodiment, the fluid collection cylinder 410 is formed to have a circular cross-section and a height in an upward-downward direction. In this embodiment, an upper side of the fluid collection cylinder 410 is fluidically connected to the first circulation flow path 210 and the third circulation flow path 230, respectively. Further, a lower side of the fluid collection cylinder 410 is fluidically connected to the recovery fluid outlet flow path 120.

A gas-phase recovery fluid (or a gas-phase residual fluid) from which a discharge fluid has been at least partially separated while passing through the fluid separation unit 300 may be introduced into the upper side of the fluid collection cylinder 410 along the first circulation flow path 210.

As described above, the gas-phase recovery fluid introduced into the fluid collection cylinder 410 is cooled or compressed to undergo a phase change into a liquid phase. Accordingly, the liquid-phase recovery fluid falls downward due to a density difference and is collected in the lower side of the fluid collection cylinder 410. The liquid-phase recovery fluid collected in the lower side may be discharged from the fluid collection cylinder 410 to the recovery fluid outlet flow path 120 by its own weight. At this time, a flow rate of the discharged liquid-phase recovery fluid may be maintained at a constant level by the flow rate pump 640.

Meanwhile, a gas-phase discharge fluid that has not undergone the phase change is positioned relatively at the upper side of the fluid collection cylinder 410 due to a density difference. Such a gas-phase discharge fluid may flow back to the first circulation flow path 210 through the third circulation flow path 230 that is fluidically connected to the upper side of the fluid collection cylinder 410.

Therefore, it will be understood that positions at which the fluid collection cylinder 410 is fluidically connected to the first circulation flow path 210, the third circulation flow path 230, and the recovery fluid outlet flow path 120 may be determined depending on phases of fluids flowing through the flow paths 210, 230, and 120.

The cooling device 420 provides a refrigerant for cooling the gas-phase recovery fluid introduced into the fluid collection cylinder 410. The cooling device 420 is connected to the fluid collection cylinder 410 through a refrigerant flow path 430. In one embodiment, the refrigerant delivered from the cooling device 420 may flow through a pipe (not shown) configured to surround an outer circumferential surface of the fluid collection cylinder 410.

In addition, the cooling device 420 provides a refrigerant for cooling the gas-phase recovery fluid accommodated in the second container C2. The cooling device 420 is connected to the second container C2 through the refrigerant flow path 430. In one embodiment, the refrigerant delivered from the cooling device 420 may flow through a pipe (not shown) configured to surround an outer circumferential surface of the second container C2.

The cooling device 420 may be provided in any form capable of supplying a refrigerant for heat exchange with a gas-phase or liquid-phase recovery fluid introduced into the fluid collection cylinder 410 or the second container C2. In one embodiment, the cooling device 420 may be provided in the form of a chiller.

The cooling device 420 may be electrically connectable to an external power source (not shown) and the control unit 800, respectively. The cooling device 420 may receive electric power and control signals required for operation from the external power source (not shown) and the control unit 800.

The refrigerant flow path 430 fluidically connects the cooling device 420 to the fluid collection cylinder 410 and the second container C2. The refrigerant flow path 430 defines a flow path through which the refrigerant provided from the cooling device 420 is delivered to the fluid collection cylinder 410 and the second container C2. In addition, the refrigerant flow path 430 defines a flow path through which the refrigerant having exchanged heat with the recovery fluid is returned to the cooling device 420.

In the illustrated embodiment, the refrigerant flow path 430 includes a refrigerant inlet flow path 431 and a refrigerant outlet flow path 432.

The refrigerant inlet flow path 431 defines a flow path through which the refrigerant provided from the cooling device 420 flows to the fluid collection cylinder 410 and the second container C2. The refrigerant inlet flow path 431 fluidically connects the cooling device 420 to the fluid collection cylinder 410 and the second container C2.

The refrigerant inlet flow path 431 may include a branching point. One portion of the branched refrigerant inlet flow path 431 is connected to the fluid collection cylinder 410. Another portion of the branched refrigerant inlet flow path 431 is fluidically connected to the second container C2.

A flow rate control valve 711 is disposed on the refrigerant inlet flow path 431. The flow rate control valve 711 may be configured to adjust a flow rate of the refrigerant flowing in the refrigerant inlet flow path 431. In this case, the flow rate control valve 711 may be positioned between the cooling device 420 and the branching point of the refrigerant inlet flow path 431.

The refrigerant outlet flow path 432 defines a flow path through which the refrigerant that has exchanged heat with the recovery fluid accommodated in the fluid collection cylinder 410 and the second container C2 is returned to the cooling device 420. The refrigerant outlet flow path 432 fluidically connects the cooling device 420 to the fluid collection cylinder 410 and the second container C2.

The refrigerant outlet flow path 432 may include a branching point. One portion of the branched refrigerant outlet flow path 432 is connected to the fluid collection cylinder 410. Another portion of the branched refrigerant outlet flow path 432 is fluidically connected to the second container C2.

A flow rate control valve 711 is disposed on the refrigerant outlet flow path 432. The flow rate control valve 711 may be configured to adjust a flow rate of the refrigerant flowing in the refrigerant outlet flow path 432. The flow rate control valve 711 may be positioned between the cooling device 420 and the branching point of the refrigerant outlet flow path 432.

The filter unit 500 is configured to remove particulate matter remaining in the introduced mixed fluid. In addition, the filter unit 500 is configured to separate a discharge fluid remaining in a recovery fluid collected in the fluid collection cylinder 410. The filter unit 500 is fluidically connected to the inlet/outlet flow path unit 100 and the circulation flow path unit 200, respectively.

The filter unit 500 may include a plurality of components. Some of the plurality of components may be configured to remove particulate matter remaining in the introduced mixed fluid. Other components of the plurality of components may be configured to separate a discharge fluid remaining in the collected recovery fluid.

In the illustrated embodiment, the filter unit 500 includes an inlet filter 510 and an outlet filter 520.

The inlet filter 510 is configured to remove particulate matter remaining in a gas-phase mixed fluid introduced thereto. After passing through the inlet filter 510, the introduced gas-phase mixed fluid may be introduced into the fluid separation unit 300.

The inlet filter 510 may be provided in any form capable of removing particulate matter remaining in the gas-phase mixed fluid introduced into the fluid separation unit 300. In one embodiment, the inlet filter 510 may be provided in the form of a particle filter.

The inlet filter 510 may be disposed at any position at which the gas-phase mixed fluid, from which the remaining particulate matter has been removed, can be introduced into the fluid separation unit 300. In the illustrated embodiment, the inlet filter 510 is disposed between the mixed fluid inlet flow path 110 and the fluid separation unit 300.

The outlet filter 520 is configured to separate a gas-phase discharge fluid remaining in a liquid-phase recovery fluid collected in the fluid collection unit 400. After passing through the outlet filter 520, the liquid-phase recovery fluid collected in the fluid collection unit 400 may be accommodated in the second container C2.

The outlet filter 520 may be provided in any form capable of separating the gas-phase discharge fluid remaining in the liquid-phase recovery fluid. In one embodiment, the outlet filter 520 may be provided in the form of a reverse osmosis (RO) membrane filter.

The outlet filter 520 may be disposed at any position capable of separating the gas-phase discharge fluid remaining in the liquid-phase recovery fluid. In the illustrated embodiment, the outlet filter 520 is disposed between the fluid collection cylinder 410 and the second container C2.

In this case, the outlet filter 520 may be disposed at a position lower than the other side in the height direction, that is, the lower side, of the fluid collection cylinder 410. Accordingly, the liquid-phase recovery fluid collected in the fluid collection cylinder 410 may fall downward by self-weight without an additional transfer force and be delivered to the outlet filter 520.

Meanwhile, the outlet filter 520 may receive the recovery fluid from the fluid collection cylinder 410, separate the gas-phase discharge fluid therefrom, discharge the gas-phase discharge fluid to the outside, and deliver the liquid-phase recovery fluid to the second container C2. To this end, the outlet filter 520 is fluidically connected to the fluid collection cylinder 410, the outside, and the second container C2, respectively.

Specifically, the outlet filter 520 is in fluid communication with the recovery fluid outlet flow path 120 and may be fluidically connected to the fluid collection cylinder 410 and the second container C2, respectively. In addition, the outlet filter 520 is in fluid communication with the second separated fluid discharge flow path 132 and may be fluidically connected to the outside.

Accordingly, the liquid-phase recovery fluid collected in the fluid collection unit 400 may be additionally separated from the gas-phase discharge fluid by the outlet filter 520 and then accommodated in the second container C2. As a result, purity of the liquid-phase recovery fluid accommodated in the second container C2 may be improved.

The transfer force applying unit 600 provides a transfer force for allowing a fluid to flow in the gas separation system 10. In particular, the transfer force applying unit 600 may be configured to provide a transfer force to a gas-phase mixed fluid, a gas-phase residual fluid, or a gas-phase discharge fluid. In addition, the transfer force applying unit 600 may be configured to provide a transfer force to a liquid-phase recovery fluid.

The transfer force applying unit 600 is in fluid communication with the inlet/outlet flow path unit 100 and the circulation flow path unit 200, respectively. The transfer force provided by the transfer force applying unit 600 may be transmitted to a fluid flowing in the inlet/outlet flow path unit 100 or the circulation flow path unit 200.

The transfer force applying unit 600 may be provided in any form capable of providing a transfer force to a fluid. In one embodiment, the transfer force applying unit 600 may be provided in the form of a pump or a compressor.

The transfer force applying unit 600 is electrically connectable to an external power source (not shown) and the control unit 800. Electric power and control signals required for operation of the transfer force applying unit 600 may be supplied from the external power source (not shown) and the control unit 800.

A plurality of transfer force applying units 600 may be provided. The plurality of transfer force applying units 600 may be coupled to and in fluid communication with the inlet/outlet flow path unit 100 or the circulation flow path unit 200 at different positions, respectively. The plurality of transfer force applying units 600 may respectively provide a transfer force to fluids flowing in the inlet/outlet flow path unit 100 or the circulation flow path unit 200.

In the illustrated embodiment, the transfer force applying unit 600 includes an inlet transfer force applying device 610, a circulation transfer force applying device 620, a discharge transfer force applying device 630, and a flow rate pump 640.

The inlet transfer force applying device 610 is coupled to and in fluid communication with the first circulation flow path 210 to provide a transfer force for introducing a gas-phase mixed fluid. In addition, the inlet transfer force applying device 610 provides a transfer force for allowing a gas-phase residual fluid introduced from the third circulation flow path 230 and the fourth circulation flow path 240 to be introduced again into the first circulation flow path 210.

The inlet transfer force applying device 610 may be disposed at any position capable of providing a transfer force for introducing the gas-phase mixed fluid or the gas-phase residual fluid into the first circulation flow path 210. In the illustrated embodiment, the inlet transfer force applying device 610 is disposed adjacent to an upstream end of the first circulation flow path 210. In this case, the inlet transfer force applying device 610 may be disposed downstream of a point at which the third circulation flow path 230 and the fourth circulation flow path 240 are fluidically connected to the first circulation flow path 210.

As described above, in an embodiment in which the second circulation flow path 220 is connected to the first circulation flow path 210 upstream of the inlet transfer force applying device 610, the inlet transfer force applying device 610 may also apply a transfer force to the gas-phase residual fluid flowing in the second circulation flow path 220. In this embodiment, the check valve 713 provided in the second circulation flow path 220 is opened by the applied transfer force, such that the gas-phase residual fluid flowing in the second circulation flow path 220 may flow more rapidly into the first circulation flow path 210.

The circulation transfer force applying device 620 is coupled to and in fluid communication with the second circulation flow path 220 to provide a transfer force for allowing the gas-phase residual fluid that has passed through the first fluid separation unit 310 to flow toward the second fluid separation unit 320. In addition, the circulation transfer force applying device 620 provides a transfer force for allowing the gas-phase discharge fluid separated in the second fluid separation unit 320 to flow along the first separated fluid discharge flow path 131 and be discharged to the outside.

The circulation transfer force applying device 620 may be disposed at any position capable of providing a transfer force to the gas-phase residual fluid or the gas-phase discharge fluid. In the illustrated embodiment, the circulation transfer force applying device 620 is disposed between the first fluid separation unit 310 and the second fluid separation unit 320.

The discharge transfer force applying device 630 is coupled to and in fluid communication with the second separated fluid discharge flow path 132 to provide a transfer force for allowing the gas-phase discharge fluid separated in the outlet filter 520 to be discharged to the outside. In addition, the discharge transfer force applying device 630 may apply a transfer force to the liquid-phase recovery fluid accommodated in the fluid collection cylinder 410. When the discharge transfer force applying device 630 is operated, the liquid-phase recovery fluid collected in the fluid collection cylinder 410 may be discharged to the recovery fluid outlet flow path 120.

The discharge transfer force applying device 630 may be disposed at any position capable of providing a transfer force to the gas-phase discharge fluid. In the illustrated embodiment, the discharge transfer force applying device 630 is disposed between a downstream end of the second separated fluid discharge flow path 132 and the outlet filter 520.

The flow rate pump 640 is configured to limit a flow rate at which the liquid-phase recovery fluid collected in the fluid collection cylinder 410 is discharged. By the flow rate pump 640, the flow rate of the liquid-phase recovery fluid discharged from the fluid collection cylinder 410 may be maintained constant, and thus the flow rate of the liquid-phase recovery fluid introduced into the outlet filter 520 may also be maintained constant.

Accordingly, a situation in which the liquid-phase recovery fluid is introduced into the outlet filter 520 at an excessive flow rate, thereby degrading separation efficiency of the gas-phase discharge fluid, may be prevented.

The flow rate pump 640 may be provided in any form capable of limiting the flow rate of the liquid-phase recovery fluid discharged from the fluid collection cylinder 410. In one embodiment, the flow rate pump 640 may be provided in the form of a fan including a plurality of blades, and may limit the flow rate of the liquid-phase recovery fluid in a waterwheel manner.

The flow rate pump 640 is electrically connectable to a transfer force applying unit control module 840 of the control unit 800. The flow rate pump 640 may be controlled by the transfer force applying unit control module 840 such that the flow rate of the liquid-phase recovery fluid discharged from the fluid collection cylinder 410 is adjusted.

The flow rate pump 640 is disposed on the recovery fluid outlet flow path 120 and is fluidically connected to the recovery fluid outlet flow path 120. In this case, the flow rate pump 640 may be disposed between the outlet filter 520 and the second container C2.

The utility unit 700 is configured to control flow of fluids flowing in the inlet/outlet flow path unit 100 or the circulation flow path unit 200. In addition, the utility unit 700 may sense information on states of fluids flowing in the inlet/outlet flow path unit 100 or the circulation flow path unit 200. Further, the utility unit 700 may sense information on a mass of a gas-phase mixed fluid accommodated in the first container C1 or a mass of a liquid-phase recovery fluid accommodated in the second container C2.

The utility unit 700 may be electrically connectable to an external power source (not shown) and the control unit 800. Electric power and control signals required for operation of the utility unit 700 may be supplied from the external power source (not shown) and the control unit 800. In addition, information sensed by the utility unit 700 may be transmitted to the control unit 800.

In the illustrated embodiment, the utility unit 700 includes a valve member 710, a weighing member 720, a pressure adjustment member 730, and a flow rate adjustment member 740.

The valve member 710 is disposed on the inlet/outlet flow path unit 100 or the circulation flow path unit 200. The valve member 710 is configured to control flow of a fluid in the inlet/outlet flow path unit 100 or the circulation flow path unit 200. In one embodiment, the valve member 710 may control a flow rate or a flow direction of the fluid.

To this end, in the illustrated embodiment, the valve member 710 includes flow rate control valves 711 and check valves 713.

The flow rate control valves 711 are disposed on the inlet/outlet flow path unit 100 or the circulation flow path unit 200 and are configured to control a flow rate of a fluid.

The flow rate control valves 711 may have any form capable of controlling a flow rate of a fluid flowing in the inlet/outlet flow path unit 100 or the circulation flow path unit 200. In one embodiment, the flow rate control valves 711 may be provided in the form of needle valves.

A plurality of flow rate control valves 711 may be provided. The plurality of flow rate control valves 711 may be disposed at different positions to control flow rates of respective fluids flowing in the inlet/outlet flow path unit 100 or the circulation flow path unit 200.

The check valves 713 are disposed on the circulation flow path unit 200 and are configured to restrict a flow direction of a fluid.

A plurality of check valves 713 may be provided. The plurality of check valves 713 may be disposed at different positions to restrict flow directions of fluids flowing in the circulation flow path unit 200. In the illustrated embodiment, the check valves 713 are respectively disposed on the first to fourth circulation flow paths 210, 220, 230, and 240.

Accordingly, it will be understood that each check valve 713 restricts the flow direction of the fluid such that the fluid is introduced again into the first fluid separation unit 310 along the first circulation flow path 210.

The weighing member 720 is configured to sense masses of the first and second containers C1 and C2 and respective fluids accommodated in the first and second containers C1 and C2. Based on masses sensed by the weighing member 720, a remaining amount of a gas-phase mixed fluid to be supplied and an amount of a collected liquid-phase recovery fluid may be identified.

The weighing member 720 may have any form capable of sensing masses of the first and second containers C1 and C2 and respective fluids accommodated therein. In one embodiment, the weighing member 720 may be provided in the form of an electronic scale. In this embodiment, the weighing member 720 may be electrically connectable to an external power source (not shown) and the control unit 800. Information on masses sensed by the weighing member 720 may be transmitted to the control unit 800.

A plurality of weighing members 720 may be provided. The plurality of weighing members 720 may be configured to respectively sense a mass of a gas-phase mixed fluid and the first container C1 accommodating the gas-phase mixed fluid, and a mass of a liquid-phase recovery fluid and the second container C2 accommodating the liquid-phase recovery fluid.

In the illustrated embodiment, the weighing member 720 includes an inlet weighing member 721 and an outlet weighing member 722.

The inlet weighing member 721 senses a mass of the first container C1 fluidically connected to the mixed fluid inlet flow path 110 and a mass of the gas-phase mixed fluid accommodated in the first container C1. The outlet weighing member 722 senses a mass of the second container C2 fluidically connected to the recovery fluid outlet flow path 120 and a mass of the liquid-phase recovery fluid accommodated in the second container C2.

The pressure adjustment member 730 is disposed on the circulation flow path unit 200 and is configured to adjust a pressure of a flowing fluid. The pressure of the fluid may be adjusted by the pressure adjustment member 730.

A plurality of pressure adjustment members 730 may be provided. The plurality of pressure adjustment members 730 may be disposed at different positions to respectively adjust pressures of fluids. In the illustrated embodiment, one pressure adjustment member 730 is provided on the first circulation flow path 210 and another pressure adjustment member 730 is provided on the second circulation flow path 220.

The pressure adjustment member 730 disposed on the first circulation flow path 210 may be positioned adjacent to an upstream side of the first circulation flow path 210. The pressure adjustment member 730 may adjust pressures of a gas-phase mixed fluid and a gas-phase residual fluid introduced into the first circulation flow path 210. In one embodiment, pressures of the gas-phase fluids may be reduced from 7 bar to 3 bar by the pressure adjustment member 730.

The pressure adjustment member 730 disposed on the second circulation flow path 220 may be positioned adjacent to a downstream side of the second circulation flow path 220. The pressure adjustment member 730 may adjust a pressure of a gas-phase residual fluid to be introduced from the second circulation flow path 220 into the first circulation flow path 210. In one embodiment, a pressure of the gas-phase residual fluid may be maintained at 3 bar by the pressure adjustment member 730.

The pressure adjustment member 730 is electrically connectable to a flow control module 850 of the control unit 800. The pressure adjustment member 730 may be controlled by the flow control module 850 such that a pressure of a gas-phase fluid passing through the pressure adjustment member 730 is adjusted.

The flow rate adjustment member 740 is configured to adjust a flow rate of a gas-phase mixed fluid or a gas-phase residual fluid flowing in the circulation flow path unit 200. The flow rate of the fluid may be adjusted by the flow rate adjustment member 740.

A plurality of flow rate adjustment members 740 may be provided. The plurality of flow rate adjustment members 740 may be disposed at different positions to respectively adjust flow rates of fluids. In the illustrated embodiment, one flow rate adjustment member 740 is provided on the first circulation flow path 210, one on the second circulation flow path 220, one on the third circulation flow path 230, and one on the first separated fluid discharge flow path 131.

The flow rate adjustment member 740 provided on the first circulation flow path 210 may be positioned between a point at which the first circulation flow path 210 is fluidically connected to the second circulation flow path 220 and the first fluid separation unit 310. The flow rate adjustment member 740 provided on the second circulation flow path 220 may be positioned between the first fluid separation unit 310 and the second fluid separation unit 320.

The flow rate adjustment member 740 provided on the third circulation flow path 230 may be positioned between a point at which the third circulation flow path 230 is fluidically connected to the first circulation flow path 210 and the fluid collection cylinder 410. The flow rate adjustment member 740 provided on the first separated fluid discharge flow path 131 may be positioned downstream of the second fluid separation unit 320.

The flow rate adjustment member 740 is electrically connectable to the flow control module 850 of the control unit 800. The flow rate adjustment member 740 may be controlled by the flow control module 850 such that a flow rate of a gas-phase fluid flowing through the flow rate adjustment member 740 is adjusted.

The control unit 800 applies control signals for controlling components of the gas separation system 10. The control unit 800 may be electrically connectable to an external terminal (not shown) to receive the control signals. Alternatively, the control unit 800 may be configured to include separate components for receiving control signals from an operator.

The control unit 800 may be provided in any form capable of inputting, computing, and outputting information. In one embodiment, the control unit 800 may include components for computation, such as a CPU or a microprocessor, components for communication such as input/output ports and a wireless communication module, components for information input such as buttons, a touch screen, or a touch panel, and components for information output such as a speaker or a screen.

The control unit 800 is electrically connectable to the fluid separation unit 300, the fluid collection unit 400, the transfer force applying unit 600, and the utility unit 700. The control unit 800 may compute control signals for controlling the fluid separation unit 300, the fluid collection unit 400, the transfer force applying unit 600, and the utility unit 700, and may control them in accordance with the computed control signals.

In the illustrated embodiment, the control unit 800 includes a main control panel 810, a sub control panel 820, a fluid separation unit control module 830, a transfer force applying unit control module 840, and a flow control module 850. Each of the panels 810 and 820 and each of the modules 830, 840, and 850 may be electrically connectable to each other.

The main control panel 810 receives control information for controlling the fluid separation unit 300, the fluid collection unit 400, the transfer force applying unit 600, and the utility unit 700. In addition, the main control panel 810 may output operating states or sensed information of the fluid separation unit 300, the fluid collection unit 400, the transfer force applying unit 600, and the utility unit 700. The main control panel 810 is electrically connectable to the fluid separation unit 300, the fluid collection unit 400, the transfer force applying unit 600, and the utility unit 700.

The sub control panel 820 receives control signals for controlling the cooling device 420. The sub control panel 820 may control the cooling device 420 in accordance with the received control signals. In addition, the sub control panel 820 may output information on an operating state of the cooling device 420. The sub control panel 820 is electrically connectable to the cooling device 420.

The fluid separation unit control module 830 is electrically connectable to the fluid separation unit 300. The fluid separation unit control module 830 may receive information sensed by the temperature sensing member 350, that is, information on temperatures of the respective separation membranes 311, 312, 321, and 322.

In addition, the fluid separation unit control module 830 may compute control information for controlling the temperature adjustment member 340 in accordance with the received temperatures. The fluid separation unit control module 830 may control the temperature adjustment member 340 in accordance with the computed control information.

In one embodiment, the fluid separation unit control module 830 may control the temperature adjustment member 340 in accordance with control information input through the main control panel 810. In this embodiment, the fluid separation unit control module 830 may compare the input control information, that is, a preset temperature, with a sensed temperature, and may compute a control signal for controlling the temperature adjustment member 340 based on a result of the comparison.

The transfer force applying unit control module 840 is electrically connectable to the transfer force applying unit 600. The transfer force applying unit control module 840 may compute control information for controlling respective components of the transfer force applying unit 600, that is, the inlet transfer force applying device 610, the circulation transfer force applying device 620, the discharge transfer force applying device 630, and the flow rate pump 640. In addition, the transfer force applying unit control module 840 may control the respective components of the transfer force applying unit 600 in accordance with the computed control information.

In one embodiment, the transfer force applying unit control module 840 may control the discharge transfer force applying device 630 using information on a liquid level of a liquid-phase recovery fluid sensed by the liquid level sensor 413. That is, when the sensed liquid level information is equal to or higher than preset liquid level information, the transfer force applying unit control module 840 may control the discharge transfer force applying device 630 to operate such that the liquid-phase recovery fluid collected in the fluid collection cylinder 410 can flow.

The flow control module 850 is electrically connectable to the utility unit 700 and is configured to control a flow of fluid formed in the gas separation system 10. The flow control module 850 is electrically connectable to the valve member 710, the weighing member 720, the pressure adjustment member 730, and the flow rate adjustment member 740 of the utility unit 700.

The flow control module 850 may control the utility unit 700 in accordance with preset pressure values or flow rate values.

In particular, the flow control module 850 may control the pressure adjustment member 730 to maintain a pressure of a gas-phase mixed fluid or a gas-phase residual fluid flowing in the circulation flow path unit 200 in accordance with a preset pressure value.

In addition, the flow control module 850 may control the flow rate adjustment member 740 to maintain a flow rate of a gas-phase mixed fluid or a gas-phase residual fluid flowing in the circulation flow path unit 200 in accordance with a preset flow rate value.

In this case, the preset pressure value and the preset flow rate value may be set to any values at which separation efficiency in the fluid separation unit 300 can be maximized.

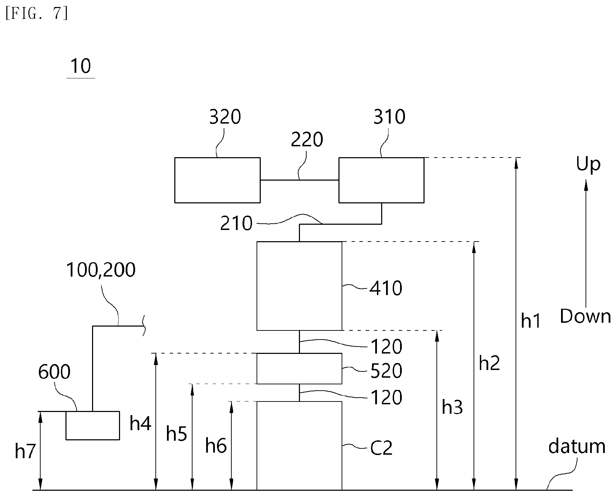

Referring to FIG. 7, height differences between respective components of the gas separation system 10 described above are illustrated by way of example. In the illustrated embodiment, a portion indicated as a datum is a reference line, which may be the ground or a lower surface of an enclosure 20.

First, a first height h1, which is a height of the first fluid separation unit 310 and the second fluid separation unit 320 of the fluid separation unit 300, is formed to be the greatest compared to other components. That is, the first fluid separation unit 310 and the second fluid separation unit 320 are positioned at the highest location compared to other components of the gas separation system 10.

This is because, when the first fluid separation unit 310 and the second fluid separation unit 320 are positioned lower than other components, gas-phase recovery fluid separated by the first and second fluid separation units 310 and 320 must flow to other components along a flow path extending upward.

In this case, due to a density difference, the gas-phase recovery fluid may accumulate at a bent portion of the flow path and liquefaction may occur. In such a case, the gas-phase recovery fluid separated by the first and second fluid separation units 310 and 320 accumulates, thereby reducing separation efficiency and adversely affecting circulation of fluid inside the gas separation system 10.

Therefore, in the gas separation system 10 according to an embodiment of the present invention, by disposing the first and second fluid separation units 310 and 320 at the highest position, the separated gas-phase recovery fluid may flow downward, that is, in a gravity direction.

To this end, a height of a downstream side of the first and second fluid separation units 310 and 320, that is, a portion from which the gas-phase recovery fluid is discharged, may be positioned higher than the fluid collection cylinder 410 for collecting and phase-changing the gas-phase recovery fluid and the second container C2 for accommodating the phase-changed recovery fluid.

In addition, a second height h2, which is a height of an upstream side of the fluid collection cylinder 410, is formed to be equal to or lower than the first height h1 and equal to or higher than a third height h3, which is a height of a downstream side of the fluid collection cylinder 410. Accordingly, the gas-phase recovery fluid (or gas-phase residual fluid) that has passed through the fluid separation unit 300 may be introduced into the fluid collection cylinder 410 in a direction from an upper side toward a lower side.

In addition, as described above, the fluid collection cylinder 410 may extend in an upward-downward direction. Accordingly, the gas-phase recovery fluid introduced into the upstream side of the fluid collection cylinder 410 may undergo a phase change and flow toward the downstream side, thereby being collected in the fluid collection cylinder 410.

Further, the third height h3, which is a height of the downstream side of the fluid collection cylinder 410, may be greater than a fourth height h4, which is a height of an upstream side of the outlet filter 520, a fifth height h5, which is a height of a downstream side of the outlet filter 520, and a sixth height h6, which is a height of the second container C2. The fourth height h4, which is the height of an upstream side, that is, an inlet end, of the outlet filter 520, is formed to be equal to or lower than the third height h3, which is the height of the downstream side of the fluid collection cylinder 410. Accordingly, the liquid-phase recovery fluid collected in the fluid collection cylinder 410 may flow to the outlet filter 520 in a direction from an upper side toward a lower side.

The fifth height h5, which is the height of a downstream side, that is, an outlet end, of the outlet filter 520, may be equal to or higher than the sixth height h6, which is an upper height of the second container C2. Accordingly, the liquid-phase recovery fluid that has passed through the outlet filter 520 may be accommodated in the second container C2 in a direction from an upper side toward a lower side.

Meanwhile, a seventh height h7, which is a height of the transfer force applying unit 600, may be formed to be equal to or lower than the first to sixth heights h1, h2, h3, h4, h5, and h6. Accordingly, the transfer force applying unit 600 is positioned lower than upper sides of the fluid separation unit 300, the outlet filter 520, and the second container C2.

This is because vibration generated when the transfer force applying unit 600 operates may affect the fluid separation unit 300. In addition, since the gas-phase mixed fluid introduced into the fluid separation unit 300 and the gas-phase recovery fluid or the gas-phase residual fluid discharged therefrom have relatively low density, suction from a lower side may be more advantageous.

Accordingly, the gas-phase or liquid-phase recovery fluid may flow from the fluid separation unit 300 to the second container C2 in a direction from an upper side toward a lower side.

Referring again to FIG. 3, a process in which fluid flows in various forms inside the gas separation system 10 according to an embodiment of the present invention is illustrated by way of example.

First, an inlet flow FI, in which fluid is introduced into the gas separation system 10, is formed along the mixed fluid inlet flow path 110 that is fluidically connected to the first container C1 accommodating the gas-phase mixed fluid. The inlet flow FI may be defined as a flow of the gas-phase mixed fluid.

The inlet flow FI is continuous with a first circulation flow FC1. The inlet flow FI may be formed by a transfer force provided by the inlet transfer force applying device 610 disposed on the first circulation flow path 210.

The first circulation flow FC1 starts at an upstream end of the first circulation flow path 210, that is, a portion where the first circulation flow path 210 is fluidically connected to the mixed fluid inlet flow path 110. The first circulation flow FC1 extends to the fluid collection cylinder 410 via the inlet filter 510, the utility unit 700, and the first fluid separation unit 310 disposed on the first circulation flow path 210. The first circulation flow FC1 may be defined as a flow of the gas-phase mixed fluid or the gas-phase residual fluid.

The first circulation flow FC1 may be formed by a transfer force provided by the inlet transfer force applying device 610 disposed on the first circulation flow path 210.

The first circulation flow FC1 is continuous with a second circulation flow FC2. The second circulation flow FC2 starts from the first fluid separation unit 310 and extends to a portion where the second circulation flow path 220 is fluidically connected to the first circulation flow path 210, that is, to a downstream end of the second circulation flow path 220. The gas-phase residual fluid separated in the first fluid separation unit 310 forms the second circulation flow FC2 that passes through the second fluid separation unit 320 along the second circulation flow path 220.

While passing through the second fluid separation unit 320, gas-phase discharge fluid is further separated from the gas-phase residual fluid forming the second circulation flow FC2. The separated gas-phase discharge fluid forms a first discharge flow FD1 continuous with the second circulation flow FC2 along the first separated fluid discharge flow path 131 and is discharged to the outside of the gas separation system 10.

The gas-phase residual fluid from which the gas-phase discharge fluid has been further separated flows along the second circulation flow path 220 and is then reintroduced into the first circulation flow path 210 to form the first circulation flow FC1. The second circulation flow FC2 may be formed by a transfer force provided by the circulation transfer force applying device 620 disposed on the second circulation flow path 220.

Meanwhile, most of the gas-phase fluid that has flowed to the fluid collection cylinder 410 along the first circulation flow FC1 may be the gas-phase recovery fluid, but may include a portion of the gas-phase discharge fluid mixed therein. At this time, the gas-phase discharge fluid may remain in a gas phase in the fluid collection cylinder 410.

The gas-phase discharge fluid forms a third circulation flow FC3 while flowing along the third circulation flow path 230. The third circulation flow FC3 extends from the fluid collection cylinder 410 to an upstream end of the first circulation flow path 210. The third circulation flow FC3 is continuous with the first circulation flow FC1. Accordingly, the gas-phase discharge fluid may again form the first circulation flow FC1 and be reintroduced into the first fluid separation unit 310.

The liquid-phase recovery fluid collected in the fluid collection cylinder 410 flows to the second container C2 along the recovery fluid outlet flow path 120, thereby forming an outlet flow FO. At this time, the outlet flow FO is formed to pass through the outlet filter 520, and gas-phase discharge fluid remaining in the liquid-phase recovery fluid is separated by the outlet filter 520. The separated gas-phase discharge fluid flows along the second separated fluid discharge flow path 132 by a transfer force provided by the discharge transfer force applying device 630, thereby forming a second discharge flow FD2.

Meanwhile, the liquid-phase recovery fluid that has flowed to the second container C2 while forming the outlet flow FO is accommodated in the second container C2. At this time, a portion of the gas-phase discharge fluid may remain in the liquid-phase recovery fluid. The gas-phase discharge fluid forms a fourth circulation flow FC4 by a transfer force provided by the inlet transfer force applying device 610 and flows along the fourth circulation flow path 240.

At this time, downstream sides of the second circulation flow FC2, the third circulation flow FC3, and the fourth circulation flow FC4 are continuous with an upstream side of the first circulation flow FC1. Accordingly, the gas-phase fluids forming the second to fourth circulation flows FC2, FC3, and FC4 again form the first circulation flow FC1 and are reintroduced into the fluid separation unit 300, such that an additional separation process of the gas-phase recovery fluid may be performed.

Meanwhile, the cooling device 420 forms refrigerant flows FRI and FRO to exchange heat with the gas-phase recovery fluid collected in the fluid collection cylinder 410. A refrigerant inlet flow FRI extends from the cooling device 420 to the fluid collection cylinder 410 and is branched to the second container C2 at a portion thereof. A refrigerant outlet flow FRO extends from the fluid collection cylinder 410 and the second container C2 to the cooling device 420, respectively, and merges at a portion thereof.

Accordingly, in the gas separation system 10 according to an embodiment of the present invention, the introduced gas-phase mixed fluid may be separated into the gas-phase recovery fluid and the gas-phase discharge fluid through a plurality of separation processes. As a result, separation efficiency of the recovery fluid is improved, and purity of the separated recovery fluid may also be improved.

Therefore, in the gas separation system 10 according to an embodiment of the present invention, since the separation process of the recovery fluid is performed multiple times, separation efficiency and purity of the recovery fluid may be enhanced.

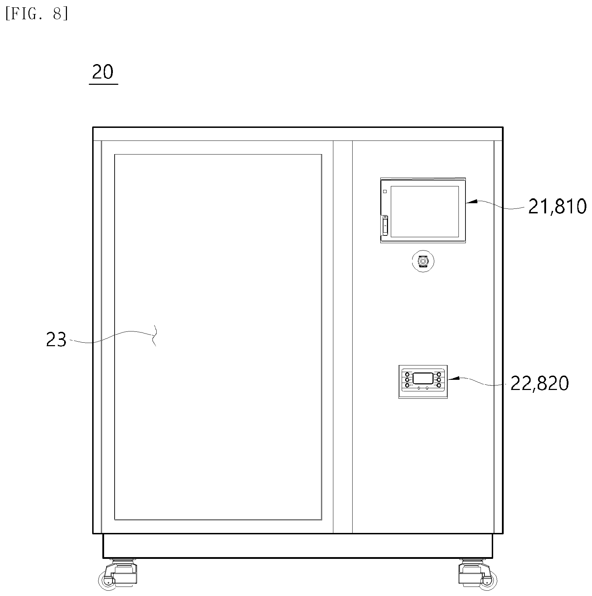

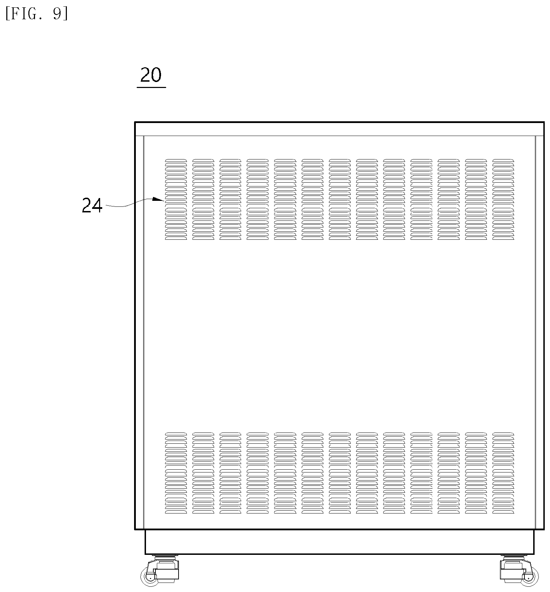

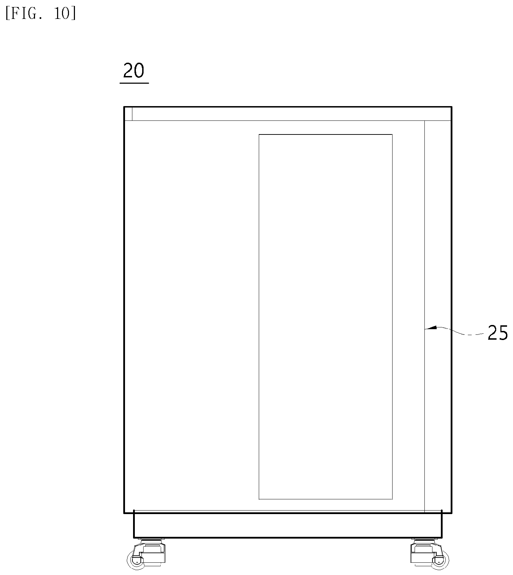

Referring to FIGS. 8 to 10, an enclosure 20 accommodating the gas separation system 10 is illustrated. The enclosure 20 may accommodate the gas separation system 10 such that some components of the gas separation system 10, for example, the main control panel 810 and the sub control panel 820, are exposed to the outside.

In addition, some components of the enclosure 20 may be configured to be movable. A space formed inside the enclosure 20 (that is, an accommodating space 23 to be described later) may be at least partially opened by the movable components. The first container C1 accommodating a gas-phase mixed fluid and the second container C2 accommodating a liquid-phase recovery fluid may be accommodated in the enclosure 20 or withdrawn from the enclosure 20 through the partially opened portion.

The enclosure 20 may be formed of a material having high rigidity and high heat resistance. This is to stably support the heavy gas separation system 10 and the first and second containers C1 and C2 and to prevent damage caused by heat generated or absorbed during a fluid recovery process.

The enclosure 20 may have a shape corresponding to a shape of the gas separation system 10. In the illustrated embodiment, the enclosure 20 has a rectangular pillar shape having a rectangular cross-section and a height in an upward-downward direction.

In the illustrated embodiment, the enclosure 20 includes a first enclosure opening 21, a second enclosure opening 22, an accommodating space 23, a ventilation opening 24, and a door 25.

The first enclosure opening 21 forms a passage through which the accommodating space 23 formed inside the enclosure 20 and the gas separation system 10 accommodated therein are at least partially exposed to the outside. The first enclosure opening 21 is formed through one surface of the enclosure 20, which is a front-side surface in the illustrated embodiment. The main control panel 810 may be exposed to the outside through the first enclosure opening 21. The first enclosure opening 21 may have a larger area than the second enclosure opening 22.

The second enclosure opening 22 forms another passage through which the accommodating space 23 formed inside the enclosure 20 and the gas separation system 10 accommodated therein are at least partially exposed to the outside. The second enclosure opening 22 is formed through the same one surface of the enclosure 20, which is the front-side surface in the illustrated embodiment. The sub control panel 820 may be exposed to the outside through the second enclosure opening 22. The second enclosure opening 22 may have a smaller area than the first enclosure opening 21.

The accommodating space 23 is a space formed inside the enclosure 20. The accommodating space 23 accommodates the gas separation system 10. The accommodating space 23 is in communication with the outside through the first enclosure opening 21, the second enclosure opening 22, and the ventilation opening 24.

The ventilation opening 24 forms a space for external air to be introduced into the accommodating space 23. Heat generated while the gas separation system 10 is operated may be cooled by the external air introduced through the ventilation opening 24. The ventilation opening 24 is formed on another surface of the enclosure 20, which is a rear-side surface in the illustrated embodiment. A plurality of ventilation openings 24 may be formed and spaced apart from each other in a width direction and a height direction of the enclosure 20.

The door 25 is one of the components of the enclosure 20, that is, a movable component. The door 25 may be movably provided to open or close the accommodating space 23. The door 25 is formed on still another surface of the enclosure 20, which is a left-side surface in the illustrated embodiment. In one embodiment, the door 25 may be rotatably provided to open or close a left side of the accommodating space 23. The first and second containers C1 and C2 may be accommodated in the accommodating space 23 or withdrawn from the accommodating space 23 through an opening opened by the door 25.

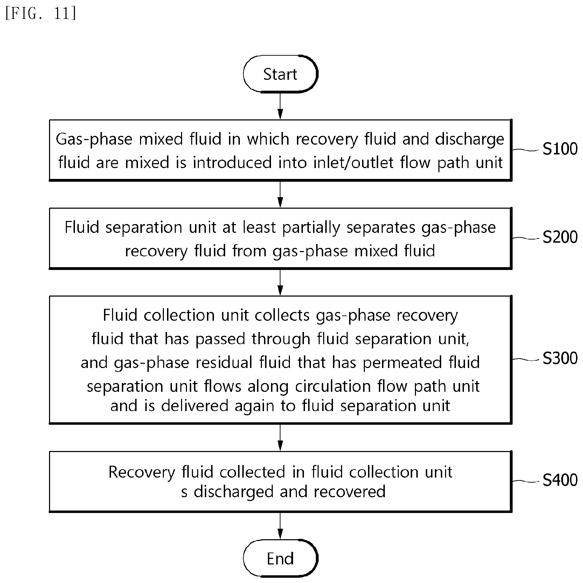

Referring to FIGS. 11 to 23, a flow of a gas separation method using the gas separation system 10 according to an embodiment of the present invention is illustrated by way of example. It will be understood that the gas separation method according to the illustrated embodiment may be implemented through the gas separation system 10 according to the above-described embodiment of the present invention.

In the embodiment illustrated in FIG. 11, the gas separation method includes a step (S100) of introducing a gas-phase mixed fluid, in which a recovery fluid and a discharge fluid are mixed, into an inlet/outlet flow path unit 100, a step (S200) of separating, by the fluid separation unit 300, a gas-phase recovery fluid at least partially from the gas-phase mixed fluid, a step (S300) of collecting, by the fluid collection unit 400, the gas-phase recovery fluid that has passed through the fluid separation unit 300 and allowing gas-phase residual fluid that has passed through the fluid separation unit 300 to flow along the circulation flow path unit 200 and be transferred back to the fluid separation unit 300, and a step (S400) of allowing the liquid-phase recovery fluid collected in the fluid collection unit 400 to flow out and be recovered.

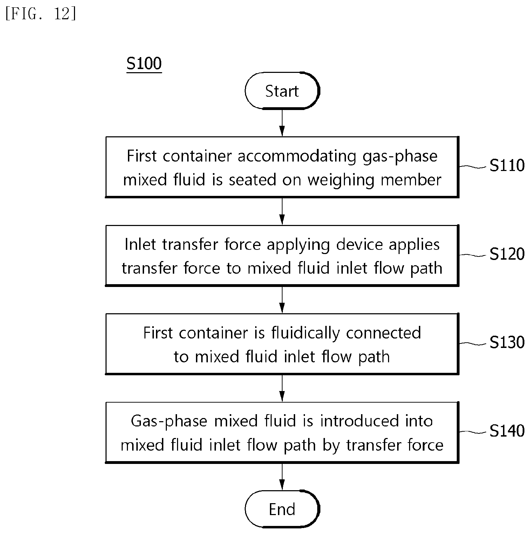

Referring to FIG. 12, a detailed flow of the step (S100) of introducing the gas-phase mixed fluid, in which the recovery fluid and the discharge fluid are mixed, into the inlet/outlet flow path unit 100 is illustrated. The step (S100) is a step in which the first container C1 accommodating the gas-phase mixed fluid is connected to the inlet/outlet flow path unit 100 and the gas-phase mixed fluid is introduced into the inlet/outlet flow path unit 100.

First, the first container C1 accommodating the gas-phase mixed fluid is seated on the inlet weighing member 721 (S110). A mass of the first container C1 and the gas-phase mixed fluid accommodated therein sensed by the inlet weighing member 721 may be transmitted to the control unit 800 and output.

The inlet transfer force applying device 610 applies a transfer force to the mixed fluid inlet flow path 110 (S120). To this end, the transfer force applying unit control module 840 of the control unit 800 may control operation of the inlet transfer force applying device 610 in accordance with the mass detected by the inlet weighing member 721.

For example, when the mass sensed by the inlet weighing member 721 exceeds a preset reference mass value, that is, a mass of the first container C1 itself, it may be understood that the gas-phase mixed fluid is accommodated in the first container C1. In this case, the transfer force applying unit control module 840 may control the inlet transfer force applying device 610 to operate.

The first container C1 is fluidically connected to the mixed fluid inlet flow path 110 (S130). Accordingly, the first container C1 is in communication with the mixed fluid inlet flow path 110. The gas-phase mixed fluid accommodated in the first container C1 is introduced into the mixed fluid inlet flow path 110 by the transfer force applied by the inlet transfer force applying device 610 (S140).

Meanwhile, even when the mass sensed by the inlet weighing member 721 decreases to be equal to or less than the preset reference mass value, the transfer force applying unit control module 840 may control the inlet transfer force applying device 610 to continuously operate. This is because the inlet transfer force applying device 610 applies a transfer force not only to the introduced gas-phase mixed fluid but also to the gas-phase discharge fluid flowing along the circulation flow path unit 200.

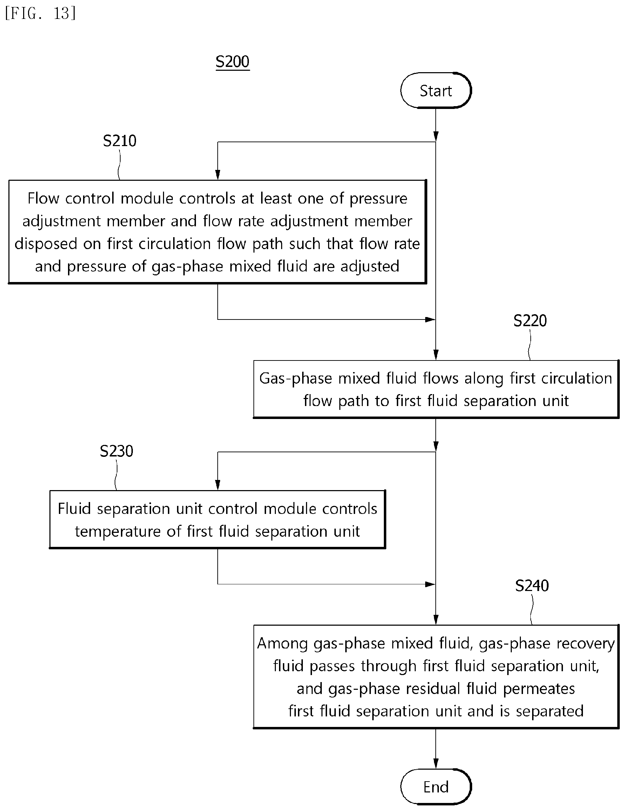

Referring to FIGS. 13 to 15, a detailed flow of the step (S200) of separating, by the fluid separation unit 300, the gas-phase recovery fluid at least partially from the gas-phase mixed fluid is illustrated. The step (S200) is a step in which a portion of the introduced gas-phase mixed fluid permeates the fluid separation unit 300 while the remainder passes through the fluid separation unit 300 without being separated, thereby being separated.

In order to adjust a flow rate and pressure of the gas-phase mixed fluid, the flow control module 850 controls at least one of the pressure adjustment member 730 and the flow rate adjustment member 740 disposed on the first circulation flow path 210 (S210). In this case, the flow control module 850 may control both the pressure adjustment member 730 and the flow rate adjustment member 740 such that both the flow rate and the pressure of the gas-phase mixed fluid flowing in the first circulation flow path 210 are adjusted.

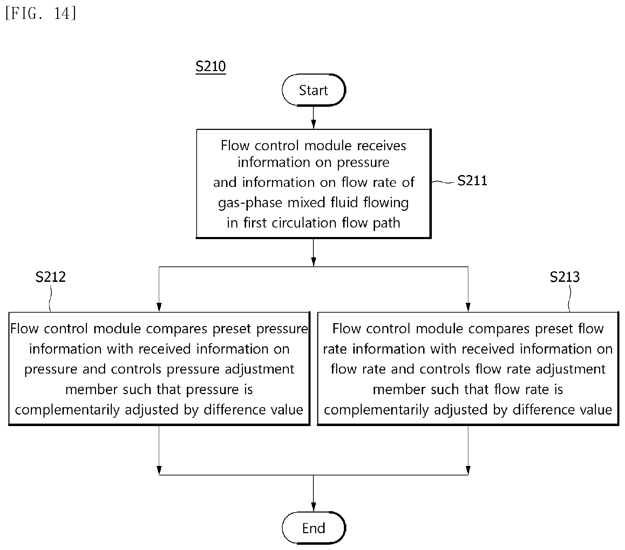

Referring to FIG. 14, a detailed flow of the step (S210) is illustrated by way of example.

First, the flow control module 850 receives information on a pressure and information on a flow rate of the gas-phase mixed fluid flowing in the first circulation flow path 210 (S211). To this end, the flow control module 850 may be electrically connectable to a pressure sensor (not shown) and a flow rate sensor (not shown) provided on the first circulation flow path 210.

Thereafter, the flow control module 850 may respectively control the pressure adjustment member 730 and the flow rate adjustment member 740. That is, the pressure and the flow rate of the gas-phase mixed fluid flowing in the first circulation flow path 210 may be independently adjusted.

The flow control module 850 compares preset pressure information with the received pressure information. When a difference exists as a result of the comparison, the flow control module 850 controls the pressure adjustment member 730 such that the pressure is complementarily adjusted by an amount corresponding to the difference (S212).

In addition, the flow control module 850 compares preset flow rate information with the received flow rate information. When a difference exists as a result of the comparison, the flow control module 850 controls the flow rate adjustment member 740 such that the flow rate is complementarily adjusted by an amount corresponding to the difference (S213).

In one embodiment, the step (S210) may be selectively performed. That is, a subsequent step (S220) may be performed without performing the step (S210).

The gas-phase mixed fluid introduced through the mixed fluid inlet flow path 110 flows to the first fluid separation unit 310 along the first circulation flow path 210 (S220). As described above, the introduced gas-phase mixed fluid flows so as to pass through the first fluid separation unit 310 at least once.

In this case, the fluid separation unit control module 830 may control a temperature of the first fluid separation unit 310 such that the gas-phase recovery fluid and the gas-phase residual fluid (or discharge fluid) are effectively separated from the gas-phase mixed fluid (S230). To this end, the fluid separation unit control module 830 may control the temperature adjustment member 340 provided in the first fluid separation unit 310.

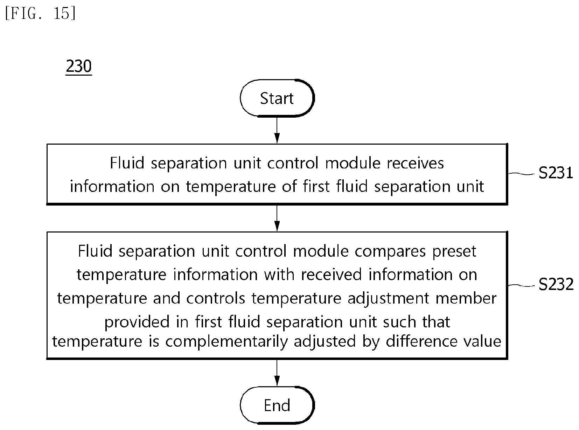

Referring to FIG. 15, a detailed flow of the step (S230) is illustrated by way of example.

First, the fluid separation unit control module 830 receives information on a temperature of the first fluid separation unit 310 (S231). To this end, the fluid separation unit control module 830 may be electrically connected to the temperature sensing member 350 provided in the first fluid separation unit 310.

The fluid separation unit control module 830 compares preset temperature information with the received temperature information. When a difference exists as a result of the comparison, the fluid separation unit control module 830 controls the temperature adjustment member 340 provided in the first fluid separation unit 310 such that the temperature is complementarily adjusted by an amount corresponding to the difference (S232).

In one embodiment, the step (S230) may be selectively performed. That is, a subsequent step (S240) may be performed without performing the step (S230).

Among the gas-phase mixed fluid, a gas-phase recovery fluid passes through the first fluid separation unit 310 without separation, and a gas-phase residual fluid permeates the first fluid separation unit 310 and is separated therefrom (S240). Accordingly, the gas-phase recovery fluid and the gas-phase residual fluid that have passed through the first fluid separation unit 310 may thereafter flow along different flow paths.

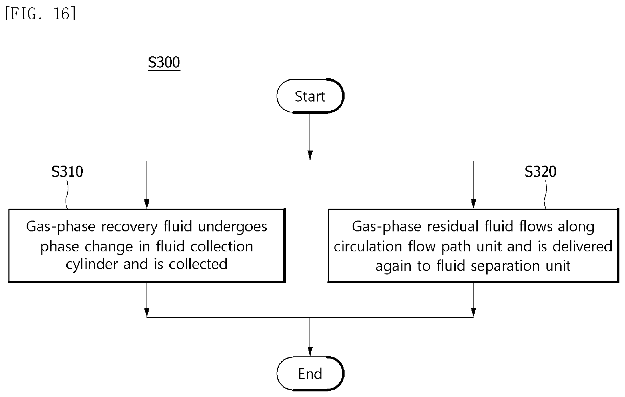

Referring to FIGS. 16 to 19, a detailed flow of step (S300), in which the fluid collection unit 400 collects the gas-phase recovery fluid that has passed through the fluid separation unit 300 and the gas-phase residual fluid that has permeated the fluid separation unit 300 flows along the circulation flow path unit 200 and is delivered again to the fluid separation unit 300, is illustrated.

The step (S300) is a step in which the gas-phase recovery fluid that has passed through the fluid separation unit 300 undergoes a phase change into a liquid phase and is collected in the fluid collection unit 400, and the gas-phase residual fluid that has permeated the fluid separation unit 300 flows again along the first circulation flow path 210 and is delivered back to the fluid separation unit 300 (S300).

That is, through the step (S300), a technical feature of the gas separation method according to an embodiment of the present invention-namely, that a gas-phase residual fluid or a gas-phase discharge fluid circulates within the gas separation system 10 and the gas-phase recovery fluid is separated over multiple cycles-may be implemented.

The step (S300) may be divided into a step (S310) of collecting the gas-phase recovery fluid after a phase change in the fluid collection cylinder 410, and a step (S320) of allowing the gas-phase residual fluid to flow along the circulation flow path unit 200 and be delivered again to the fluid separation unit 300.

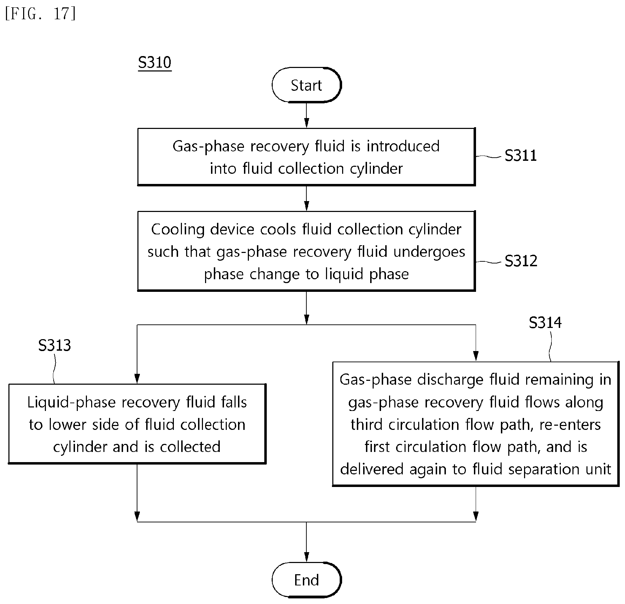

Referring to FIG. 17, a detailed flow of step (S310), in which the gas-phase recovery fluid undergoes a phase change and is collected in the fluid collection cylinder 410, is illustrated by way of example.

First, the gas-phase recovery fluid that has passed through the first fluid separation unit 310 without separation flows further along the first circulation flow path 210 and is introduced into the fluid collection cylinder 410 (S311). The introduced gas-phase recovery fluid is cooled by a refrigerant supplied from the cooling device 420 connected to the fluid collection cylinder 410 and undergoes a phase change into a liquid phase (S312).

As described above, in one embodiment, the gas-phase recovery fluid may also undergo a phase change into a liquid phase due to a pressure change in the fluid collection cylinder 410. In this embodiment, the fluid collection cylinder 410 may be connected to any compression device, such as a pump or a compressor.

The liquid-phase recovery fluid falls toward a lower side of the fluid collection cylinder 410 and is collected therein (S313). At this time, some gas-phase discharge fluid may remain in the gas-phase recovery fluid introduced into the fluid collection cylinder 410. Even when the gas-phase recovery fluid undergoes a phase change into a liquid phase, the gas-phase discharge fluid may remain in a gas phase. Due to a density difference, the gas-phase discharge fluid is positioned at an upper side of the fluid collection cylinder 410.

The gas-phase discharge fluid remaining in the gas-phase recovery fluid flows along the third circulation flow path 230 fluidically connected to the fluid collection cylinder 410. Since the third circulation flow path 230 is fluidically connected to the first circulation flow path 210, the gas-phase discharge fluid flows again along the first circulation flow path 210 and is delivered again to the first fluid separation unit 310 (S314).

Accordingly, the gas-phase discharge fluid remaining in the gas-phase recovery fluid that has been primarily separated by the first fluid separation unit 310 may be separated once again in the fluid collection cylinder 410. In addition, it will be understood that the gas-phase discharge fluid is reintroduced into the first fluid separation unit 310 such that a separation process for any remaining gas-phase recovery fluid is performed again.

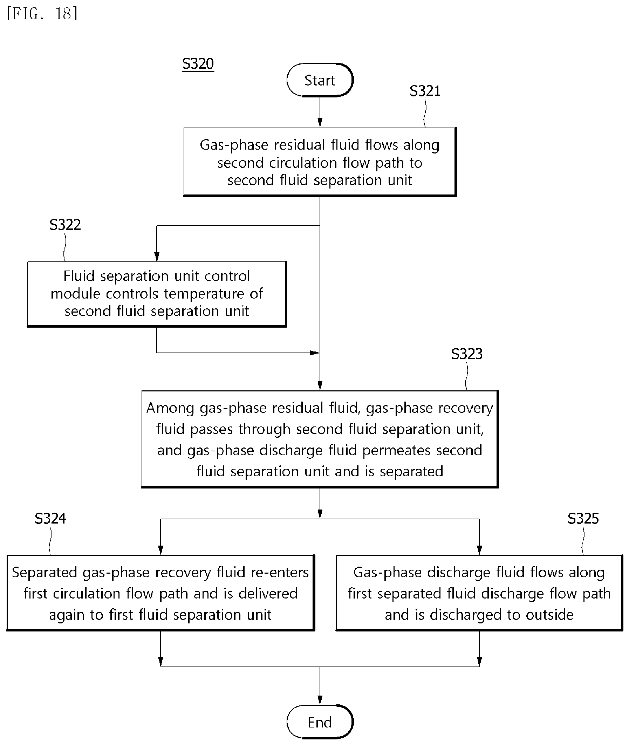

Referring to FIG. 18, a detailed flow of step (S320), in which the gas-phase residual fluid flows along the circulation flow path unit 200 and is delivered again to the fluid separation unit 300, is illustrated by way of example.

The gas-phase residual fluid, that is, the gas-phase residual fluid separated while passing through the first fluid separation unit 310, flows along the second circulation flow path 220 fluidically connected to the first circulation flow path 210 and enters the second fluid separation unit 320 (S321).

The fluid separation unit control module 830 controls a temperature of the second fluid separation unit 320 such that the gas-phase recovery fluid and the gas-phase discharge fluid are effectively separated from the gas-phase residual fluid (S322).

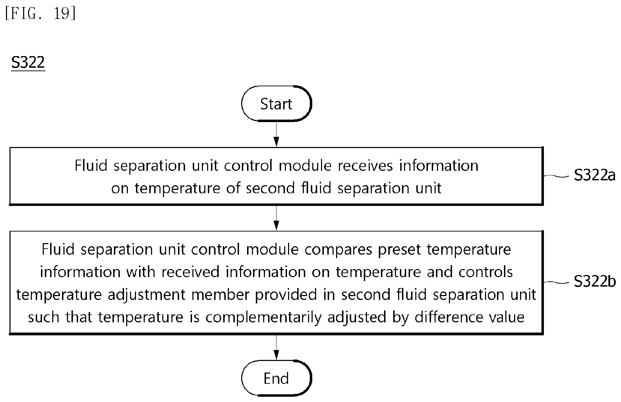

Referring to FIG. 19, a detailed flow of the step (S322) is illustrated by way of example.

First, the fluid separation unit control module 830 receives information on a temperature of the second fluid separation unit 320 (S322a). To this end, the fluid separation unit control module 830 may be electrically connected to the temperature sensing member 350 provided in the second fluid separation unit 320.

The fluid separation unit control module 830 compares preset temperature information with the received temperature information. When a difference exists as a result of the comparison, the fluid separation unit control module 830 controls the temperature adjustment member 340 provided in the second fluid separation unit 320 such that the temperature is complementarily adjusted by an amount corresponding to the difference (S322b).

The step (S322) may be selectively performed. That is, a subsequent step (S323) may be performed without performing the step (S322).

Among the gas-phase residual fluid introduced into the second fluid separation unit 320, the gas-phase recovery fluid passes through the second fluid separation unit 320 without separation, and the gas-phase discharge fluid permeates the second fluid separation unit 320 and is separated therefrom (S323).

The separated gas-phase recovery fluid flows further along the second circulation flow path 220 and is reintroduced into the first circulation flow path 210. The gas-phase recovery fluid flows further along the first circulation flow path 210 and is reintroduced into the first fluid separation unit 310 (S324).

Accordingly, it will be understood that the gas-phase residual fluid separated in the first fluid separation unit 310 is reintroduced into the first fluid separation unit 310 after the remaining gas-phase discharge fluid is separated again by the second fluid separation unit 320, such that the separation process of the gas-phase recovery fluid is performed again.

In addition, the gas-phase discharge fluid flows along the first separated fluid discharge flow path 131 fluidically connected to the second fluid separation unit 320 and is discharged to the outside (S325). Accordingly, it will be understood that the gas-phase discharge fluid discharged along the first separated fluid discharge flow path 131 has permeated each of the first and second fluid separation units 310 and 320 at least once, such that the gas-phase recovery fluid has been separated therefrom.

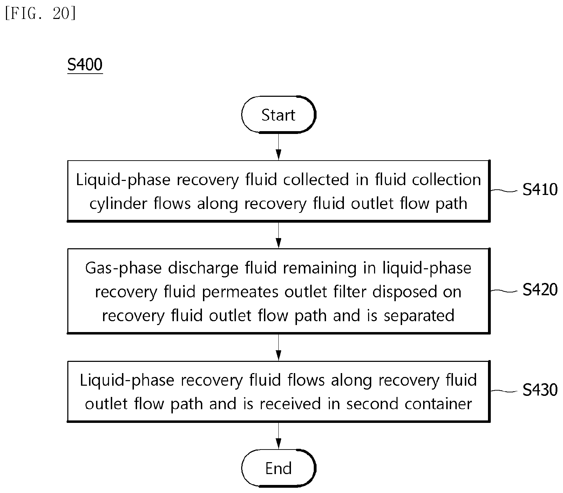

Referring to FIGS. 20 to 23, a detailed flow of step (S400), in which a liquid-phase recovery fluid collected in the fluid collection unit 400 flows out and is recovered, is illustrated. The step (S400) is a step in which the liquid-phase recovery fluid that has undergone a phase change and has been collected by the fluid collection unit 400 is discharged to the outside, and a gas-phase discharge fluid remaining in the liquid-phase recovery fluid is additionally separated (S400).

The liquid-phase recovery fluid collected in the fluid collection cylinder 410 flows along the recovery fluid outlet flow path 120 fluidically connected to the fluid collection cylinder 410 (S410). By the step (S410), the collected liquid-phase recovery fluid may be delivered to the second container C2.

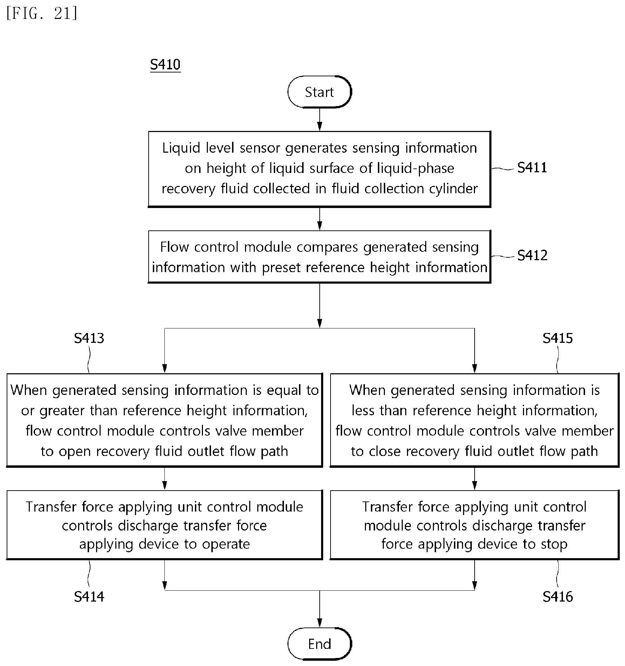

Referring to FIG. 21, a detailed flow of step (S410) is illustrated.

First, the liquid level sensor 413 provided in the fluid collection cylinder 410 generates sensing information on a height of a liquid surface of the liquid-phase recovery fluid collected in the fluid collection cylinder 410 (S411). The generated sensing information is delivered to the flow control module 850. The liquid level sensor 413 is electrically connectable to the flow control module 850.

The flow control module 850 compares the generated sensing information with preset reference height information (S412). That is, the step (S412) is a step of determining whether the liquid-phase recovery fluid has been collected in the fluid collection cylinder 410 in an amount sufficient for discharge.

When the generated sensing information is equal to or higher than the reference height information, it may be understood as a situation in which discharge of the liquid-phase recovery fluid is required. Accordingly, the flow control module 850 controls the valve member 710 to open the recovery fluid outlet flow path 120 (S413). As a result, the fluid collection cylinder 410 and the recovery fluid outlet flow path 120 are brought into fluid communication.

The transfer force applying unit control module 840 controls the discharge transfer force applying device 630 to operate (S414). As described above, the discharge transfer force applying device 630 is fluidically connected to the recovery fluid outlet flow path 120 through the second separated fluid discharge flow path 132. Accordingly, the discharge transfer force applying device 630 may apply a transfer force to the recovery fluid outlet flow path 120 and to the liquid-phase recovery fluid flowing therethrough.

When the generated sensing information is lower than the reference height information, it may be understood as a situation in which discharge of the liquid-phase recovery fluid is unnecessary. Accordingly, the flow control module 850 controls the valve member 710 to close the recovery fluid outlet flow path 120 (S415). As a result, fluid communication between the fluid collection cylinder 410 and the recovery fluid outlet flow path 120 is blocked.

Although not illustrated, the flow control module 850 may control an additional valve (not shown) provided in the fluid collection cylinder 410 in a manner corresponding to a control scheme of the valve member 710. Accordingly, the fluid collection cylinder 410 and the recovery fluid outlet flow path 120 may be brought into fluid communication with each other or blocked from each other.

In one embodiment, the reference height information may include a plurality of pieces of information having a magnitude relationship with each other.

In this case, one piece of the reference height information may be defined as height information related to an upper limit, that is, height information serving as a reference for determining that discharge is required because an amount of the liquid-phase recovery fluid collected in the fluid collection cylinder 410 is excessive when the upper limit is exceeded.

Another piece of the reference height information may be defined as height information related to a lower limit, that is, height information serving as a reference for determining that discharge is unnecessary because the amount of the liquid-phase recovery fluid collected in the fluid collection cylinder 410 is insufficient when the amount is lower than the lower limit.

The transfer force applying unit control module 840 controls the discharge transfer force applying device 630 to stop (S416). Accordingly, the liquid-phase recovery fluid no longer flows along the recovery fluid outlet flow path 120.

Next, the gas-phase discharge fluid remaining in the liquid-phase recovery fluid is further separated while permeating the outlet filter 520 disposed on the recovery fluid outlet flow path 120 (S420). By the step (S420), the liquid-phase recovery fluid collected in the fluid collection cylinder 410 may be delivered to the second container C2 after its purity is further improved.

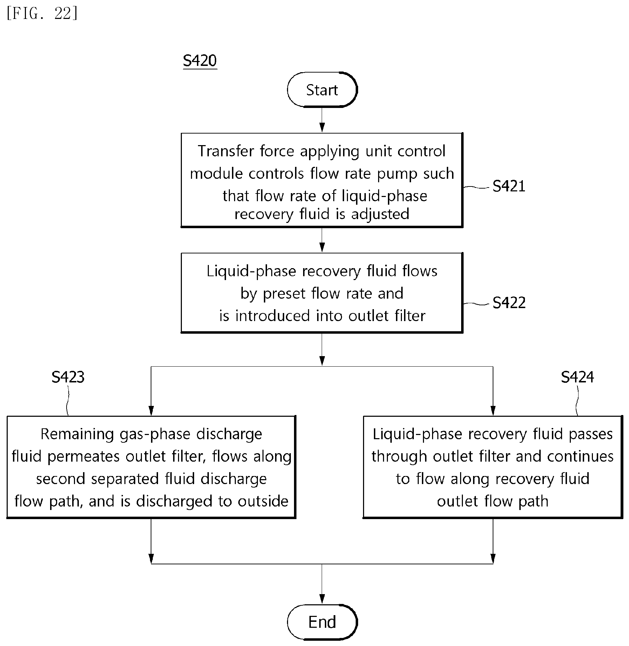

Referring to FIG. 22, a detailed flow of the step (S420) is illustrated by way of example.

First, the transfer force applying unit control module 840 controls the flow rate pump 640 such that a flow rate of the liquid-phase recovery fluid is adjusted (S421). As described above, the flow rate pump 640 may control the liquid-phase recovery fluid to flow along the recovery fluid outlet flow path 120 at a constant flow rate.

Accordingly, the liquid-phase recovery fluid may flow by a preset flow rate and be introduced into the outlet filter 520 (S422). The liquid-phase recovery fluid introduced into the outlet filter 520 may be discharged after the gas-phase discharge fluid is separated again therefrom.

Specifically, the remaining gas-phase discharge fluid is separated from the liquid-phase recovery fluid while permeating the outlet filter 520. The separated gas-phase discharge fluid flows along the second separated fluid discharge flow path 132 and is discharged to the outside (S423).

In addition, the liquid-phase recovery fluid from which the gas-phase discharge fluid has been separated passes through the outlet filter 520 and continues to flow along the recovery fluid outlet flow path 120 (S424).

The liquid-phase recovery fluid that has passed through the outlet filter 520 continues to flow along the recovery fluid outlet flow path 120 and is received in the second container C2 (S430).

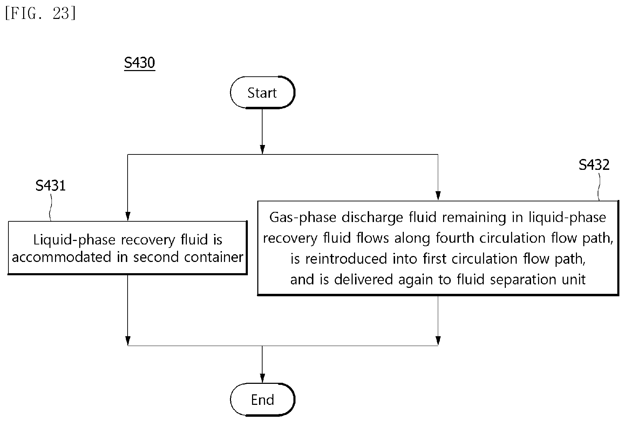

Referring to FIG. 23, a detailed flow of the step (S430) is illustrated by way of example.

The liquid-phase recovery fluid flowing along the recovery fluid outlet flow path 120 is received in the second container C2 (S431). At this time, the liquid-phase recovery fluid moves toward a lower side of the second container C2 due to a density difference.

In this case, despite the above-described multiple separation processes, some gas-phase discharge fluid may remain in the introduced liquid-phase recovery fluid. The gas-phase discharge fluid is positioned at an upper side of the second container C2 due to a density difference.

Accordingly, the gas-phase discharge fluid remaining in the liquid-phase recovery fluid flows along the fourth circulation flow path 240 fluidically connected to the second container C2. Since the fourth circulation flow path 240 is fluidically connected to the first circulation flow path 210, the gas-phase discharge fluid is introduced into the first circulation flow path 210 and is reintroduced into the fluid separation unit 300 (S423).

Accordingly, in the step (S400), the gas-phase discharge fluid remaining in the liquid-phase recovery fluid collected in the fluid collection cylinder 410 may be further separated at least once in each of the outlet filter 520 and the second container C2. In addition, the gas-phase discharge fluid separated in the second container C2 may be delivered again to the fluid separation unit 300 such that any remaining gas-phase recovery fluid is further separated.

Therefore, in the gas separation method according to an embodiment of the present invention, since the separation process of the recovery fluid is performed multiple times, separation efficiency and purity of the recovery fluid may be enhanced.

Although exemplary embodiments of the present invention have been described, the spirit of the present invention is not limited to the embodiments set forth herein. Those of ordinary skill in the art who understand the spirit of the present invention may easily propose other embodiments through supplement, change, removal, addition, etc. of elements within the scope of the same inventive concept, but such embodiments will also fall within the scope of the present invention.

| | | | |
|---|---|---|---|
| 10: | gas separation system | 20: | enclosure |
| 21: | first enclosure opening | 22: | second enclosure opening |
| 23: | accommodating space | 24: | ventilation opening |
| 25: | door | 100: | inlet/outlet flow path unit |
| 110: | mixed fluid inlet flow path | 120: | recovery fluid outlet flow path |
| 130: | separated fluid discharge flow path | 131: | first separated fluid discharge flow path |
| 132: | second separated fluid discharge flow path | 200: | |
| | circulation flow path unit | | |
| 210: | first circulation flow path | 220: | second circulation flow path |
| 230: | third circulation flow path | 240: | fourth circulation flow path |
| 300: | fluid separation unit | 310: | first fluid separation unit |
| 311: | first separation membrane | 312: | second separation membrane |
| 320: | second fluid separation unit | 321: | third separation membrane |
| 322: | fourth separation membrane | 330: | thermal insulation jacket |
| 340: | temperature adjustment member | 350: | temperature sensing member |
| 400: | fluid collection unit | 410: | fluid collection cylinder |
| 411: | liquid level indicator | 412: | pressure sensor |
| 413: | liquid level sensor | 420: | cooling device |
| 430: | refrigerant flow path | 431: | refrigerant inlet flow path |
| 432: | refrigerant outlet flow path | 500: | filter unit |
| 510: | inlet filter | 520: | outlet filter |
| 600: | transfer force applying unit | 610: | inlet transfer force applying device |
| 620: | circulation transfer force applying device | 630: | discharge transfer force applying device |
| 640: | flow rate pump | 700: | utility unit |
| 710: | valve member | 711: | flow rate control valve |
| 713: | check valve | 720: | weighing member |
| 721: | inlet weighing member | 722: | outlet weighing member |
| 730: | pressure adjustment member | 740: | flow rate adjustment member |
| 800: | control unit | 810: | main control panel |
| 820: | sub control panel | 830: | fluid separation unit control module |
| 840: | transfer force applying unit control module | 850: | flow control module |
| C1: | first container | C2: | second container |
| FI: | inlet flow | FO: | outlet flow |
| FD1: | first discharge flow | FD2: | second discharge flow |
| FC1: | first circulation flow | FC2: | second circulation flow |
| FC3: | third circulation flow | FC4: | fourth circulation flow |
| FRI: | refrigerant inlet flow | FRO: | refrigerant outlet flow |

## Claims

1. A gas separation system, comprising:
an inlet/outlet flow path unit configured to receive a gas-phase mixed fluid from an external first container and to deliver, to the outside, a recovery fluid and a discharge fluid separated from the mixed fluid;
a fluid separation unit configured to separate the received gas-phase mixed fluid into the gas-phase recovery fluid and the gas-phase discharge fluid;
a circulation flow path unit fluidically connected to the inlet/outlet flow path unit and the fluid separation unit; and
a fluid collection unit fluidically connected to the circulation flow path unit and the inlet/outlet flow path unit, and configured to receive and collect the separated gas-phase recovery fluid,
wherein the inlet/outlet flow path unit is fluidically connected to the fluid collection unit and a second container configured to receive the recovery fluid, and
wherein a downstream side of the fluid separation unit is positioned higher than an upper side of the fluid collection unit, and a lower side of the fluid collection unit is positioned higher than the second container, such that
the separated recovery fluid flows in a direction from an upper side toward a lower side, is collected in the fluid collection unit, and is received in the second container.

2. The gas separation system of claim 1,
further comprising an outlet filter disposed on the inlet/outlet flow path unit, fluidically connected to the inlet/outlet flow path unit, and configured to separate a gas-phase discharge fluid remaining in the phase-changed recovery fluid flowing from the fluid collection unit toward the second container,
wherein an inlet end of the outlet filter is positioned, in an upward-downward direction, lower than a lower side of the fluid collection unit, and
wherein an outlet end of the outlet filter is positioned, in the upward-downward direction, higher than an upper side of the second container.

3. The gas separation system of claim 1,
wherein a plurality of fluid separation units are fluidically connected to each other such that a portion of the gas-phase mixed fluid that has permeated one of the fluid separation units passes another one of the fluid separation units,
wherein the circulation flow path unit includes:
a first circulation flow path fluidically connected to the inlet/outlet flow path unit and one of the fluid separation units; and
a second circulation flow path extending between one portion and another portion of the first circulation flow path and fluidically connected to another one of the fluid separation units,
such that the gas-phase mixed fluid flows along the first circulation flow path, passes one of the fluid separation units, and is separated into a gas-phase recovery fluid and a gas-phase residual fluid, and
the gas-phase residual fluid flows along the second circulation flow path, passes another one of the fluid separation units, and, after a gas-phase discharge fluid is further separated, re-enters the first circulation flow path.

4. The gas separation system of claim 3, wherein the one portion of the first circulation flow path is positioned between a point at which the first circulation flow path is connected to the inlet/outlet flow path unit and one of the fluid separation units.

5. The gas separation system of claim 3,
wherein the second circulation flow path is fluidically connected to one of the fluid separation units, and
another one of the fluid separation units is positioned between the one portion of the first circulation flow path and the one of the fluid separation units.

6. The gas separation system of claim 3,
wherein the fluid collection unit includes:
a fluid collection cylinder fluidically connected to the first circulation flow path to receive and accommodate the gas-phase recovery fluid that has passed one of the fluid separation units; and
a cooling device connected to the fluid collection cylinder and configured to provide a refrigerant that cools the gas-phase recovery fluid such that the gas-phase recovery fluid undergoes a phase change to a liquid phase, and
wherein the fluid collection cylinder extends in an upward-downward direction, such that an upper side of the fluid collection cylinder is positioned below the fluid separation unit, and a lower side of the fluid collection cylinder is positioned above the second container.

7. The gas separation system of claim 6,
wherein the circulation flow path unit includes a third circulation flow path fluidically connected to the fluid collection cylinder and the first circulation flow path, and
the gas-phase discharge fluid remaining in the liquid-phase recovery fluid accommodated in the fluid collection cylinder and not having undergone a phase change flows along the third circulation flow path and re-enters the first circulation flow path.

8. The gas separation system of claim 6,
wherein the inlet/outlet flow path unit includes a recovery fluid outlet flow path fluidically connected to the fluid collection cylinder and the second container, and
the liquid-phase recovery fluid that has undergone a phase change in the fluid collection cylinder is discharged along the recovery fluid outlet flow path to the second container.

9. The gas separation system of claim 8,
further comprising an outlet filter positioned between the fluid collection cylinder and the second container, fluidically connected to the recovery fluid outlet flow path, and configured to separate the gas-phase discharge fluid remaining in the liquid-phase recovery fluid,
wherein the inlet/outlet flow path unit includes a separated fluid discharge flow path fluidically connected to the outlet filter to define a flow path through which the separated gas-phase discharge fluid is discharged to the outside.

10. The gas separation system of claim 9, further comprising a flow rate pump fluidically connected to the separated fluid discharge flow path and positioned between the outlet filter and the second container, the flow rate pump being configured to adjust a flow rate of the liquid-phase recovery fluid that has passed through the outlet filter.

11. The gas separation system of claim 8,
wherein the circulation flow path unit includes a fourth circulation flow path fluidically connected to the second container and the first circulation flow path, and
the gas-phase mixed fluid remaining in the liquid-phase recovery fluid introduced into the second container flows along the fourth circulation flow path and re-enters the first circulation flow path.

12. A gas separation system, comprising:
a fluid separation unit configured to receive a gas-phase mixed fluid from the outside and to separate the received gas-phase mixed fluid into a gas-phase recovery fluid and a gas-phase discharge fluid; and
a fluid collection unit fluidically connected to the fluid separation unit to receive and collect the separated gas-phase recovery fluid,
wherein a downstream side of the fluid separation unit is positioned higher than an upper side of the fluid collection unit such that the separated recovery fluid flows in a direction from an upper side toward a lower side and is collected in the fluid collection unit.

13. A gas separation system, comprising:
a fluid separation unit configured to receive a gas-phase mixed fluid from an external first container and to separate the received gas-phase mixed fluid into a gas-phase recovery fluid and a gas-phase discharge fluid; and
a fluid collection unit fluidically connected to the fluid separation unit to receive and collect the separated gas-phase recovery fluid,
wherein a lower side of the fluid collection unit is positioned higher than an external second container such that the recovery fluid collected in the fluid collection unit is accommodated in the second container in a direction from an upper side toward a lower side.
